# EUROPEAN PATENT APPLICATION

(11) **EP 4 679 147 A1**
(43) Date of publication of application: **14.01.2026**
(21) Application number: 24766951.8
(22) Date of filing: 27.02.2024
(51) Int. Cl.: G02B 5/23, B32B 7/023, B32B 23/08, B32B 27/00, B32B 27/30, B60J 1/00, C08L 101/00, C09J 7/22, C09J 129/04, G02B 1/04, G02B 1/14, G02B 3/00, G02C 7/10

(54) **MULTILAYER BODY, OPTICAL ARTICLE, COATING LAYER-CONTAINING MULTILAYER BODY, LENS, EYEGLASSES, AND FILM FOR WINDOWS**

(30) Priority: 03.03.2023 JP 2023032569; 06.11.2023 JP 2023189532
(71) Applicant: TOKUYAMA CORPORATION, Yamaguchi 745-8648 (JP)
(72) Inventor: SHIMIZU Yasutomo, Shunan-shi, Yamaguchi 745-8648 (JP); KAWASHIMA Takahiro, Shunan-shi, Yamaguchi 745-8648 (JP)
(74) Representative: Papula Oy
(86) International application number: PCT/JP2024/007017
(87) International publication number: WO 2024/185580

(57) **Abstract**

The purpose of the present invention is to provide: a multilayer body wherein a functional dye has excellent durability; and a coating layer-containing multilayer body, an optical article, a lens, eyeglasses and a film for windows, each of which comprises this multilayer body. One embodiment of the present invention provides a multilayer body. This multilayer body comprises a first optical base material, a second optical base material, a functional layer, a first bonding layer and a second bonding layer. The first optical base material has a first main surface and a second main surface. The second optical base material has a first main surface and a second main surface. The functional layer is positioned between the first optical base material and the second optical base material. The functional layer contains a resin and a functional dye. The first bonding layer bonds the first optical base material and the functional layer to each other. The second bonding layer bonds the second optical base material and the functional layer to each other. At least one of the first bonding layer and the second bonding layer contains at least one polyvinyl resin that is selected from the group consisting of a polyvinyl alcohol resin and a modified polyvinyl alcohol resin.

## Description

### TECHNICAL FIELD

The present invention relates to a laminate, an optical component, a coat layer-bearing laminate, a lens, spectacles, and a window film.

### BACKGROUND ART

Plastic spectacles include plastic lenses. For example, plastic lenses are manufactured by subjecting semi-finished lenses (semi-products) to various processing steps. The top convex surface of the semi-finished lens is provided with functional layers such as a hard coat layer and an antireflective coating layer. In addition, the bottom concave surface of the semi-finished lens is cut and polished.

In recent years, attention has been focused on photochromic lenses, which have photochromic properties that enable them to change their color depending on the amount of ultraviolet light they are exposed to. Photochromic lenses can be obtained by applying a photochromic compound to plastic lenses. The photochromic compound can form two or more isomers that have different optical absorption spectra and reversibly change into one another under the effect of light.

Conventional methods for manufacturing a photochromic lens include a kneading method including dispersing a photochromic compound into a semi-finished lens matrix; and a layering method including forming a photochromic compound-containing layer on the surface of a semi-finished lens.

A binder sheet method is a method for manufacturing a semi-finished lens, which includes forming a binder sheet including two optical sheets and a photochromic compound-containing resin layer in between them; and integrating the binder sheet with a lens base material to form the semi-finished lens. For example, this method includes inserting the binder sheet into a die and performing thermoplastic resin injection molding on the binder sheet in the die to form the semi-finished lens. The binder sheet method can use an independent, photochromic compound-containing material to form the self-finished lens and thus tends to have high production efficiency and facilitate mass production as compared to the kneading method and the layering method.

### Citation List

### Patent Document

Patent Document 1: Japanese Unexamined Patent Application, Publication No. 2013-033131
Patent Document 2: PCT International Publication No. WO2019/163728
Patent Document 2: PCT International Publication No. WO2017/154901
Patent Document 4: US Patent No. 11754860, Specification

### DISCLOSURE OF THE INVENTION

### Problems to be Solved by the Invention

It is an object of the present invention to provide a laminate that contains a functional colorant and keeps it highly durable; and a coat layer-bearing laminate, an optical component, a lens, spectacles, and a window film each including such a laminate.

### Means for Solving the Problems

The present disclosure provides a laminate. The laminate includes a first optical base material, a second optical base material, a functional layer, a first adhesively layer, and a second adhesive layer. The first optical base material has a first main surface and a second main surface. The second optical base material has a first main surface and a second main surface. The functional layer is located between the first optical base material and the second optical base material. The functional layer includes a resin and a functional colorant. The first adhesive layer adheres to the first optical base material and the functional layer. The second adhesive layer adheres to the second optical base material and the functional layer. At least one selected from the group consisting of the first adhesive layer and the second adhesive layer includes at least one polyvinyl resin selected from the group consisting of a polyvinyl alcohol resin and a modified polyvinyl alcohol resin.

The present disclosure provides a coat layer-bearing laminate. The coat layer-bearing laminate includes the laminate according to an embodiment; and a coat layer. The coat layer covers at least part of the first optical base material and the second optical base material. The coat layer includes at least one resin selected from the group consisting of an epoxy resin, an oxetane resin, an acrylic resin, a methacrylic resin, and a urethane resin.

The present disclosure provides an optical component. The optical component includes the laminate according to an embodiment or the coat layer-bearing laminate according to another embodiment.

The present disclosure provides a lens. The lens includes the optical component according to an embodiment.

The present disclosure provides spectacles. The spectacles include the lens according to an embodiment.

### Effects of the Invention

The present invention provides a laminate that contains a functional colorant and keeps it highly durable; and a coat layer-bearing laminate, an optical component, a lens, spectacles, and a window film each including such a laminate.

### BRIEF DESCRIPTION OF THE DRAWINGS

FIG. 1 is a schematic cross-sectional view of an example of the laminate according to an embodiment;
FIG. 2 is a schematic cross-sectional view of an example of the coat layer-bearing laminate according to an embodiment;
FIG. 3 is a schematic cross-sectional view of an example of the optical component according to an embodiment; and
FIG. 4 is a schematic perspective view of exemplary spectacles according to an embodiment.

### PREFERRED MODE FOR CARRYING OUT THE INVENTION

An embodiment provides a laminate. The laminate includes a first optical base material, a second optical base material, a functional layer, a first adhesive layer, and a second adhesive layer. The first optical base material has a first main surface and a second main surface. The second optical base material has a first main surface and a second main surface. The functional layer is located between the first optical base material and the second optical base material. The functional layer includes a resin and a functional colorant. The first adhesive layer adheres to the first optical base material and the functional layer. The second adhesive layer adheres to the second optical base material and the functional layer. At least one selected from the group consisting of the first adhesive layer and the second adhesive layer includes at least one polyvinyl resin selected from the group consisting of a polyvinyl alcohol resin and a modified polyvinyl alcohol resin.

The laminate according to an embodiment may be used, for example, as the binder sheet mentioned above. In such a case, the laminate is sometimes required to keep, durable, a functional colorant therein. Specifically, a functional colorant such as a photochromic compound includes a compound that changes its structure upon exposure to light or any other type of energy to develop color, become colorless, or change color. When oxidized by oxygen or other oxidants, such a functional colorant may become resistant to such structural change and undergo functional degradation. In the laminate according to an embodiment, at least one of the first adhesive layer or the second adhesive layer includes at least one polyvinyl resin selected from the group consisting of a polyvinyl alcohol resin and a modified polyvinyl alcohol resin. Such a polyvinyl resin can function not only as an adhesive but also as a barrier layer to block oxygen penetration. Therefore, the functional colorant in the functional layer in contact with the adhesive layer with such features is less prone to degradation. Thus, the laminate according to an embodiment will keep the functional colorant highly durable.

Hereinafter, the laminate according to an embodiment will be described in detail.

### Laminate

The laminate according to an embodiment may be used as a binder sheet as mentioned above. Specifically, the laminate having the functional layer containing a functional colorant such as a photochromic compound according to an embodiment may be used as a functional sheet.

The laminate according to an embodiment preferably has a thickness of 100 µm or more, more preferably 120 µm or more, even more preferably 150 µm or more. With a larger thickness, the laminate will tend to have higher shape stability. In an example, the thickness of the laminate may have an upper limit of 1,000 µm or less, although there is no specific upper limit required. In another example, the thickness of the laminate preferably has an upper limit of 500 µm or less, more preferably 400 µm or less. With a smaller thickness, the laminate can have higher handleability even when used for the production of spectacle lenses with a small central thickness.

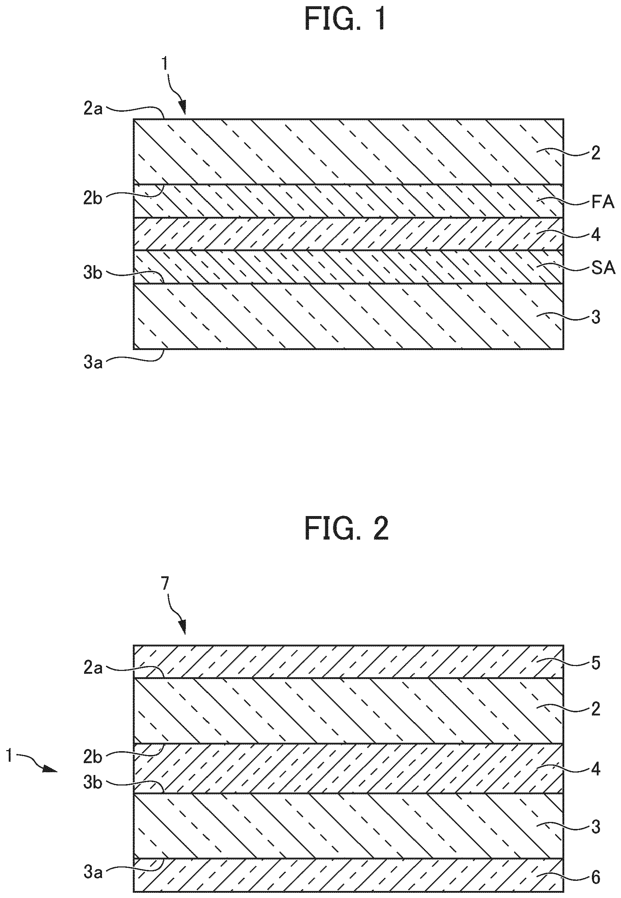

FIG. 1 is a schematic cross-sectional view of an example of the laminate according to an embodiment. As shown in FIG. 1, the laminate 1 includes a first optical base material 2, a second optical base material 3, a functional layer 4 between them, a first adhesive layer FA between the functional layer 4 and the first optical base material 2, and a second adhesive layer SA between the functional layer 4 and the second optical base material 3. The first optical base material 2 has a first main surface 2a and a second main surface 2b. The first main surface 2a forms one outermost surface of the laminate 1. The second main surface 2b is in contact with the first adhesive layer FA. The second optical base material 3 has a first main surface 3a and a second main surface 3b. The first main surface 3a forms another outermost surface of the laminate 1. The second main surface 3b is in contact with the second adhesive layer SA.

### First and Second Optical Base Materials

The first and second optical base materials may each be a visible light-transmitting optical film or sheet. The first and second optical base materials may each be a colorless transparent film, a translucent film, or a colored transparent film.

The first and second optical base materials each typically has a thickness of 10 µm or more and 100 µm or less, preferably 20 µm or more and 80 µm or less. The first and second optical base materials may have the same or different thicknesses.

The first and second optical base materials are each preferably a resin film or a resin sheet. The resin may be at least one resin selected from the group consisting of cellulose resin, acrylic resin, methacrylic resin, polyurethane resin, polyurethane urea resin, polyamide resin, polyester resin, polyimide resin, epoxy resin, polyolefin resin, polyvinyl alcohol resin, and polycarbonate resin.

At least one of the first or second optical base material preferably includes a saponified triacetyl cellulose resin.

In such an optical base material, for example, the saponified portion may have a contact angle of 60° or less with pure water. With a smaller contact angle, the optical base material will tend to have higher adhesion to the surface of the other member. The contact angle is preferably 50° or less, more preferably 30° or less, even more preferably 15° or less. In an example, the contact angle may have a lower limit of 5°. In another example, the contact angle may have a lower limit of 10°. The contact angle can be measured, for example, using DropMaster 500 manufactured by Kyowa Interface Science.

The optical base material may include a TAC film with its first and second main surfaces at least partially saponified. The optical base material preferably includes a TAC film with at least one of its first or second main surface saponified, and more preferably includes a TAC film with its both main surfaces saponified. The first and second optical base materials are each preferably a saponified TAC film. Alternatively, however, one of the first and second optical base materials may be a non-saponified TAC film or a film of any resin other than TAC resin.

The cellulose resin may be, for example, diacetyl cellulose, tripropyl cellulose, or dipropyl cellulose.

The polyamide resin may be, for example, a polyamide resin produced by polycondensation reaction of ε-caprolactam, 10-aminodecanoic acid lactam, ω-lauric lactam, or any other ω-aminocarboxylic acid; a polyamide resin produced by copolycondensation reaction of a diamine and a dicarboxylic acid; or a copolymer thereof. The polyamide resin is preferably an alicyclic or semi-aromatic polyamide resin produced by copolycondensation reaction.

The polyester resin may be, for example, a polycondensation product of a dicarboxylic acid, such as terephthalic acid or isophthalic acid, and a diol, such as ethylene glycol, butylene glycol, or 1,4-cyclohexanedimethanol.

The (meth)acrylic resin may be, for example, a homopolymer of methyl methacrylate or a copolymer of two or more (meth)acrylic monomers.

The polyurethane resin and the polyurethane urea resin may be known resins produced by reaction of a diisocyanate compound, such as isophorone diisocyanate, with a polyol compound, such as polycarbonate polyol or polyester polyol. The polyurethane resin or the polyurethane urea resin is preferably a resin produced through reaction of a low-molecular-weight diol, triol, diamine, triamine, or any other chain extender.

The polyimide resin may be a polymerization product of an aromatic tetracarboxylic acid and an aromatic diamine. The aromatic tetracarboxylic acid may be pyromellitic acid, 3,3',4,4'-biphenyltetracarboxylic acid, 2,3',3,4'-biphenyltetracarboxylic acid, 3,3',4,4'-benzophenonetetracarboxylic acid, 2,3,6,7-naphthalenetetracarboxylic acid, 2,2-bis(3,4-dicarboxyphenyl)propane, pyridine-2,3,5,6-tetracarboxylic acid, any anhydride thereof, any dianhydride thereof, or any other aromatic tetracarboxylic acid derived from an ester or halide of any of the foregoing acids.

The epoxy resin is preferably, for example, a resin produced by condensation reaction of bisphenol A or bisphenol F and epichlorohydrin, any other multifunctional epoxy resin, or a biphenyl epoxy resin.

The polyolefin resin is preferably, for example, polypropylene, polyethylene, ethylene-propylene copolymer, ethylene-α-olefin copolymer, or propylene-α-olefin copolymer.

### Functional Layer

The functional layer includes a resin and a functional colorant. The resin may be at least one resin selected from the group consisting of a polyurethane resin, a polyurethane urea resin, a polythiourethane resin, and a polythiourethane urea resin. The functional layer may contain a product resulting from curing of the functional layer-forming composition described below.

For example, the functional layer has a thickness of 0.1 µm or more and 100 µm or less. The functional layer may have a thickness smaller or larger than that of the first or second optical base material.

### Functional Layer-Forming Composition

The functional layer-forming composition may include a functional colorant and a polymerizable component(s). The polymerizable component(s) will form an adhesive layer matrix. The polymerizable component or components may include a second prepolymer or a first polymer or may include a first polymer and a second prepolymer and/or a third prepolymer. In other words, the functional layer-forming composition may include a first combination of the functional colorant and the polymerizable component including only the second prepolymer; a second combination of the functional colorant and the polymerizable components including the first polymer and the second prepolymer; a third combination of the functional colorant and the polymerizable components including the first polymer and the third prepolymer; a fourth combination of the functional colorant and the polymerizable components including the first polymer, the second prepolymer, and the third prepolymer; or a fifth combination of the functional colorant and the polymerizable component including only the first polymer.

### Functional Colorant

The functional colorant includes, for example, at least one selected from the group consisting of a photochromic compound, an ultraviolet absorber, a blue light absorber, an infrared absorber, a dye, and an electrochromic compound.

The photochromic compound may be, for example, at least one selected from the group consisting of a chromene compound, a fulgide compound, and a spirooxazine compound. The photochromic compound is preferably a chromene compound. Chromene compounds include 1-benzopyran skeleton-containing compounds, spiropyran compounds, which have a spiropyran skeleton, and naphthopyran compounds, which have a naphthopyran skeleton. Naphthopyran compounds include indenonaphthopyran compounds, which have an indenonaphthopyran skeleton. The chromene compound preferably includes an indenonaphthopyran compound having an indeno[2,1-f]naphtho[1,2-b]pyran skeleton. Cured materials including a cured, indeno[2,1-f]naphtho[1,2-b]pyran skeleton-containing, chromene compound tend to have high durability.

The indenonaphthopyran compound preferably includes a compound represented by Formula (IIIa) below.

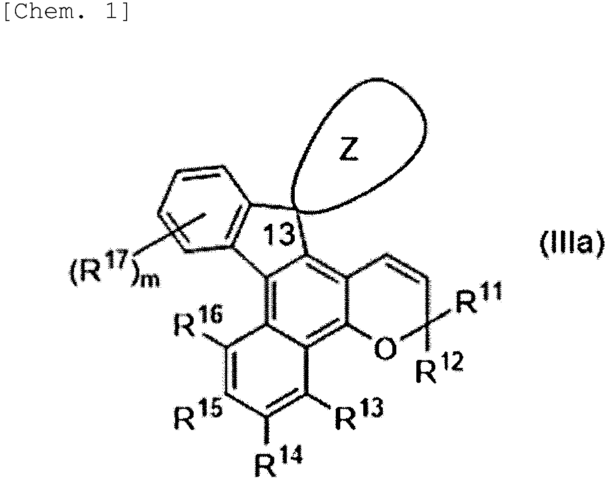

In Formula (IIIa), the Z ring is a substituted or unsubstituted spiro ring having a spiro carbon atom at position 13. The Z ring may form, with the carbon atom at position 13, an aliphatic ring, a fused polycyclic ring, a heterocyclic ring, or a heterocyclic aromatic ring. The Z ring is preferably an aliphatic ring having 5 to 16 ring-member carbon atoms. The aliphatic ring more preferably has an alkyl substituent having 1 to 3 carbon atoms.

In Formula (IIIa), R¹¹, R¹², R¹³, R¹⁴, R¹⁵, R¹⁶, and R¹⁷ are each independently a hydrogen atom, a hydroxyl group, a methoxycarbonyl group, an ethoxycarbonyl group, an alkyl group, a cycloalkyl group, a haloalkyl group, an alkoxy group, an amino group, a substituted amino group, an optionally substituted heterocyclic group, a halogen atom, an alkylthio group, an optionally substituted arylthio group, a nitro group, a formyl group, a hydroxycarbonyl group, an alkylcarbonyl group, an alkoxycarbonyl group, an optionally substituted aralkyl group, an optionally substituted aralkoxy group, an optionally substituted aryloxy group, an optionally substituted aryl group, an optionally substituted heteroaryl group, a thiol group, an alkoxyalkylthio group, a haloalkylthio group, an optionally substituted cycloalkylthio group, or an oligomer group.

The alkyl group preferably has 1 to 10 carbon atoms. Examples of the alkyl group include methyl, ethyl, n-propyl, isopropyl, n-butyl, sec-butyl, tert-butyl, pentyl, and hexyl.

The haloalkyl group preferably has 1 to 10 carbon atoms. The haloalkyl group is preferably a fluoro-, chloro-, or bromo-substituted alkyl group. Preferred examples of the haloalkyl group include trifluoromethyl, tetrafluoroethyl, chloromethyl, 2-chloroethyl, and bromomethyl.

The cycloalkyl group preferably has 3 to 8 ring-member carbon atoms. Examples of the cycloalkyl group include cyclopropyl, cyclobutyl, cyclopentyl, and cyclohexyl. In this regard, the cycloalkyl group may have a substituent, and carbon atoms in the substituent shall not be counted in the number of carbon atoms (3 to 8 carbon atoms) in the cycloalkyl group.

The alkoxy group preferably has 1 to 10 carbon atoms, more preferably 1 to 6 carbon atoms. Preferred examples of the alkoxy group include methoxy, ethoxy, n-propoxy, isopropoxy, n-butoxy, sec-butoxy, and tert-butoxy.

The amino group is a primary amino group (-NH₂). The substituted amino group is a secondary or tertiary amino group in which one or two hydrogen atoms have been replaced by one or two substituents. Examples of the substituent possessed by the substituted amino group include an alkyl group having 1 to 6 carbon atoms, a haloalkyl group having 1 to 6 carbon atoms, an alkoxy group having 1 to 6 carbon atoms, a cycloalkyl group having 3 to 7 carbon atoms, an aryl group having 6 to 14 carbon atoms, and a heteroaryl group having 4 to 14 carbon atoms. Preferred examples of the amino group include amino, methylamino, dimethylamino, ethylamino, diethylamino, phenylamino, and diphenylamino.

The heterocyclic group preferably has 3 to 10 atoms. The heterocyclic group may be an aliphatic heterocyclic group or an aromatic heterocyclic group. Examples of the aliphatic heterocyclic group include morpholino, piperidino, pyrrolidinyl, piperazino, and N-methylpiperazino. Examples of the aromatic heterocyclic group include indolinyl. The heterocyclic group may have a substituent. Such a substituent is preferably an alkyl group having 1 to 10 carbon atoms. Preferred examples of the substituted heterocyclic group include 2,6-dimethylmorpholino, 2,6-dimethylpiperidino, and 2,2,6,6-tetramethylpiperidino.

Examples of the halogen atom include fluorine, chlorine, bromine, and iodine.

The alkylthio group preferably has 1 to 10 carbon atoms. Examples of the alkylthio group include methylthio, ethylthio, n-propylthio, isopropylthio, n-butylthio, sec-butylthio, and tert-butylthio.

The arylthio group preferably has 6 to 10 carbon atoms. Examples of the arylthio group include phenylthio, 1-naphthylthio, and 2-naphthylthio.

The alkylcarbonyl group preferably has 2 to 10 carbon atoms. Examples of the alkylcarbonyl group include acetyl and ethylcarbonyl.

The alkoxycarbonyl group preferably has 2 to 10 carbon atoms. Examples of the alkoxycarbonyl group include methoxycarbonyl and ethoxycarbonyl.

The aralkyl group preferably has 7 to 11 carbon atoms. Examples of the aralkyl group include benzyl, phenylethyl, phenylpropyl, phenylbutyl, and naphthylmethyl.

The aralkoxy group preferably has 7 to 11 carbon atoms. Examples of the aralkoxy group include benzyloxy and naphthylmethoxy.

The aryl group preferably has 6 to 12 carbon atoms. Examples of the aryl group include phenyl, 1-naphthyl, and 2-naphthyl.

The aryloxy group preferably has 6 to 12 carbon atoms. Examples of the aryloxy group include phenyloxy and naphthyloxy.

The heteroaryl group preferably has 3 to 12 carbon atoms. Examples of the heteroaryl group include thienyl, furyl, pyrrolinyl, pyridyl, benzothienyl, benzofuranyl, and benzopyrrolinyl.

The alkoxyalkylthio group preferably has 2 to 10 carbon atoms. Examples of the alkoxyalkylthio group include methoxymethylthio, methoxyethylthio, methoxy-n-propylthio, methoxy-n-butylthio, ethoxyethylthio, and n-propoxypropylthio.

The haloalkylthio group preferably has 1 to 10 carbon atoms. Examples of the haloalkylthio group include trifluoromethylthio, tetrafluoroethylthio, chloromethylthio, 2-chloroethylthio, and bromomethylthio.

The cycloalkylthio group preferably has 3 to 8 carbon atoms. Examples of the cycloalkylthio group include cyclopropylthio, cyclobutylthio, cyclopentylthio, and cyclohexylthio. In this regard, the cycloalkylthio group may have a substituent, and carbons in the substituent shall not be counted in the number of carbons (3 to 8 carbons) in the cycloalkylthio group.

The oligomer group includes an oligomer chain, a linking group, and an end group. The oligomer chain may include at least one selected from the group consisting of a polyalkylene oxide chain, a polysiloxane chain, and a polyester chain. The oligomer chain is a divalent group.

The polyalkylene oxide chain includes linear or branched alkylene oxide repeating units each having 1 or more and 10 or less carbon atoms. The number of repeating units in the polyalkylene oxide chain is, for example, 3 or more and 1,000 or less. The repeating unit is, for example, -CH₂O-, -CH₂CH₂O-, -CH(CH₃)CH₂O-, -CH₂CH(CH₃)O-, -CH₂CH₂CH₂O-, or -CH₂CH₂C(CH₃)O-.

The polysiloxane chain includes, for example, dimethylsilyleneoxy (-Si(CH₃)₂O-) repeating units. The number of repeating units in the polysiloxane chain is, for example, 3 or more and 1,000 or less.

The polyester chain includes, for example, -OC(=O)CH₂-, - OC(=O)CH₂CH₂CH₂CH₂C(=O)O-, or -OC(=O)CH₂CH₂CH₂CH₂C(=O)OCH₂CH₂-repeating units. The number of repeating units in the polyester chain is, for example, 3 or more and 1,000 or less.

The linking group links the photochromic compound to one end of the oligomer chain. The linking group is, for example, -O-, -O-CH₂CH₂-O-, -O-CH₂CH₂-OC(=O)CH₂CH₂C(=O)-O-, or -O-CH₂CH₂-OC(=O)CH₂CH₂C(=O)-O-CH₂-. The linking group may be a divalent or multivalent group.

The end group is bonded to the other end of the oligomer chain. The end group is, for example, a linear or branched alkyl group having 1 or more and 10 or less carbon atoms, a linear or branched alkoxy group having 1 or more and 10 or less carbon atoms, a linear or branched alkenyl group having 2 or more and 30 or less carbon atoms, or an organic residue having 1 or more and 10 or less carbon atoms and 1 or more and 3 or less oxygen atoms. The end group is preferably a methyl group.

The oligomer group may include a first linking group, an oligomer chain, and a second linking group. The first and second linking groups may have the same or different structures. The first linking group is linked to a first photochromic compound. The second linking group is linked to a second photochromic compound. The first and second photochromic compounds may have the same or different structures.

The cycloalkyl group, the arylthio group, the aralkyl group, the aralkoxy group, the aryloxy group, the aryl group, the heteroaryl group, and the cycloalkylthio group may each be substituted or unsubstituted.

The cycloalkyl group, the arylthio group, the aralkyl group, the aralkoxy group, the aryloxy group, the aryl group, the heteroaryl group, and the cycloalkylthio group may have a substituent selected from the group consisting of a primary amino group, a secondary amino group, a tertiary amino group, an alkyl group having 1 to 10 carbon atoms, a haloalkyl group having 1 to 10 carbon atoms, an alkoxy group having 1 to 10 carbon atoms, a haloalkoxy group having 1 to 10 carbon atoms, an alkylthio group having 1 to 10 carbon atoms, a hydroxyl group, a cycloalkyl group having 3 to 8 carbon atoms, an aryl group having 6 to 12 carbon atoms, an alkylaryl group having 1 to 20 carbon atoms, a heterocycloalkyl group having 1 to 8 carbon atoms and 1 to 5 heteroatoms, a heteroaryl group having 1 to 8 carbon atoms and 1 to 5 heteroatoms, an aryloxy group having 6 to 12 carbon atoms, an arylthio group having 6 to 12 carbon atoms, a cyano group, a nitro group, and a halogen atom. The number of substituents may be one or two or more.

R¹³ and R¹⁴, R¹⁴ and R¹⁵, or R¹⁵ and R¹⁶ may be bonded to each other to form an aliphatic ring having 2 to 5 carbon atoms, an aliphatic heterocyclic ring having 1 to 4 carbon atoms and 1 to 3 heteroatoms, an aromatic ring having 4 to 12 carbon atoms, or an aromatic heterocyclic ring having 3 to 11 carbon atoms and 1 to 6 heteroatoms. The aliphatic ring, the aliphatic heterocyclic ring, the aromatic ring, and the aromatic heterocyclic ring may be unsubstituted or may have at least one substituent selected from the above substituent group.

In Formula (IIIa), m is an integer of 0 or more and 4 or less. In Formula (IIIa), m may be 1 or more or may be 2 or more.

The ultraviolet absorber has an absorption wavelength in the ultraviolet (UV) range of 400 nm or less. The ultraviolet absorber may have a maximum absorption wavelength in the range of 330 nm or more and 380 nm or less, or a maximum absorption wavelength in the range of 250 nm or more and less than 330 nm. The ultraviolet absorber may be an organic compound. The ultraviolet absorber may be, for example, at least one selected from the group consisting of a benzophenone derivative, ethylhexyl methoxycinnamate, a benzotriazole derivative, and a triazine derivative. The ultraviolet absorber preferably includes at least one selected from the group consisting of a benzophenone derivative, ethylhexyl methoxycinnamate, and a benzotriazole derivative.

The blue light absorber may be a compound having an absorption spectrum with an absorption peak in the wavelength range of more than 400 nm and 450 nm or less. Such a compound is, for example, at least one selected from the group consisting of a perylene compound, a porphyrin compound, a carotenoid compound, and a cyanine compound. The blue light absorber is preferably a porphyrin compound, more preferably a tetraazaporphyrin compound.

The high-energy visible light absorber is a blue light absorber that has an absorption peak in the wavelength range of 400 nm or more and 420 nm or less. The high-energy visible light absorber may be a compound the same as or similar to the blue light absorber.

The dye preferably includes a compound having an absorption spectrum with an absorption peak in the wavelength range of 540 nm or more and 650 nm or less, and more preferably includes a compound having an absorption spectrum with an absorption peak in the wavelength region of 550 nm or more and 600 nm or less. The optical component containing such a compound can have high anti-glare properties. Examples of such a compound include nitro compounds, azo compounds, anthraquinone compounds, threne compounds, porphyrin compounds, and rare earth metal compounds. Such a compound is preferably at least one selected from the group consisting of a tetraazaporphyrin compound and a neodymium compound.

Examples of the electrochromic compound include organic materials such as viologen, polymers having electrochromic properties, and metal salt complexes having d atoms.

The content of the functional colorant in the solids of the functional layer-forming composition is typically 0.1 mass% or more and 10 mass% or less, preferably 1 mass% or more and 5 mass% or less.

### Second Prepolymer

The second prepolymer may be a reaction product of a first prepolymer with a second polyfunctional active hydrogen compound, in which the first prepolymer is a reaction product of a first polyfunctional active hydrogen compound with a first iso(thio)cyanate compound, and the second polyfunctional active hydrogen compound is a chain extender. The second prepolymer has two or more iso(thio) cyanate groups. The second prepolymer preferably has iso(thio) cyanate groups at both ends of its main chain. The second prepolymer includes at least one selected from the group consisting of a urethane prepolymer, a urea prepolymer, a urethane-urea prepolymer, a thiourethane prepolymer, a thiourea prepolymer, and a thiourethane-urea prepolymer. The second prepolymer can undergo polymerization to form at least one resin selected from the group consisting of a (thio)urethane resin, a (thio)urea resin, and a (thio)urethane-urea resin.

The second prepolymer preferably has a number-average molecular weight of 3,000 or more, more preferably 10,000 or more, even more preferably 13,000 or more. When produced using the second prepolymer with a high number-average molecular weight, the laminate will tend to have a high peel strength. This may be because the second prepolymer molecules with a high number-average molecular weight can easily entangle with one another and thus have a high cohesive force and thus can provide a high adhesive force.

The second prepolymer preferably has a number-average molecular weight of 50,000 or less, more preferably 40,000 or less, even more preferably 30,000 or less. With an excessively high number-average molecular weight, the second prepolymer may tend to form a laminate with reduced peel strength. In other words, the second prepolymer with an excessively high number-average molecular weight tends to have a low iso(thio)cyanate group content per unit mass and thus to provide a low adhesive force.

The number-average molecular weight of the second prepolymer can be measured using gel permeation chromatography (GPC). The measurement may be performed under the conditions: two Shodex KD-806M columns (manufactured by Showa Denko) connected in series; an eluent of a LiBr (10 mmol/L)/DMF solution; a flow rate of 1 mL/min; an RI detector; and a 1.0% dimethylformamide (DMF) solution of the second prepolymer sample. The analysis software may be Empower Personal GPC Option, which is GPC analysis software manufactured by Nihon Waters.

The second prepolymer preferably has a softening point of 70°C or more, more preferably 100°C or more, even more preferably 110°C or more. With a higher softening point, the second prepolymer will tend to form a laminate with higher heat resistance and higher bonding ability. In an example, the softening point of the second prepolymer may have an upper limit of 200°C or less, and in another example, it may have an upper limit of 160°C or less, although there is no specific upper limit required.

The softening point of the second prepolymer is measured, for example, by the method described below. First, the second prepolymer is dissolved in an organic solvent to form a solution. The concentration of the second prepolymer in the solution is, for example, 34 mass%. The solution is poured into a stainless steel vessel and dried at 40°C for 10 hours, at 60°C for 10 hours, and in a vacuum dryer at 60°C for 12 hours to form a 1 mm-thick test piece. The resulting test piece is subjected to analysis using a thermal mechanical analyzer (TMA 120C manufactured by Seiko Instruments) to determine its softening point. The measurement is performed using a needle probe with a tip diameter of 0.5 mm under the conditions of a rate of temperature rise of 10°C/min and the measurement temperature range of 30 to 200°C.

The second prepolymer may make up the main component of the solids in the functional layer-forming composition. The content of the second prepolymer in the solids of the functional layer-forming composition is, for example, 90 mass% or more and 99 mass% or less. In a case where the functional layer-forming composition includes the second or fourth combination of a photochromic compound and the polymerizable components including the first polymer and the second prepolymer, the content of the second prepolymer in the solids of the functional layer-forming composition is typically 5 mass% or more and 50 mass% or less, preferably 10 mass% or more and 40 mass% or less.

### First Prepolymer

The first prepolymer is a reaction product of a first polyfunctional active hydrogen compound with a first iso(thio)cyanate compound. The first prepolymer has two or more iso(thio)cyanate groups. The first prepolymer preferably has iso(thio)cyanate groups at both ends of its main chain. The first prepolymer includes at least one selected from the group consisting of a urethane prepolymer, a urea prepolymer, a thiourethane prepolymer, and a thiourea prepolymer. The first prepolymer is a raw material for the second prepolymer.

The first prepolymer preferably has a number-average molecular weight of 500 or more and 10,000 or less, more preferably 1,000 or more and 5,000 or less. The number-average molecular weight of the first prepolymer can be measured by the same method as that for the second prepolymer.

### First Iso(thio)cyanate Compound

The first iso(thio)cyanate compound has two or more iso(thio)cyanate groups. The first iso(thio)cyanate compound preferably has two iso(thio)cyanate groups. The first iso(thio)cyanate compound is more preferably a diisocyanate compound having two isocyanate groups.

The first iso(thio)cyanate compound preferably has a molar mass of 100 or more and 500 or less. With a molar mass in such a range, the first iso(thio)cyanate compound will tend to form the second prepolymer or the first polymer with a desired number-average molecular weight. The first iso(thio)cyanate compound more preferably has a molar mass of 150 or more and 300 or less.

The first iso(thio)cyanate compound includes at least one selected from the group consisting of an aliphatic iso(thio)cyanate compound, an alicyclic iso(thio)cyanate compound, and an aromatic iso(thio)cyanate compound. The first iso(thio)cyanate compound is preferably an alicyclic iso(thio)cyanate compound. A single first iso(thio)cyanate compound or a mixture of two or more first iso(thio)cyanate compounds may be used.

Examples of the aliphatic isocyanate compound include pentamethylene diisocyanate, hexamethylene diisocyanate, heptamethylene diisocyanate, octamethylene diisocyanate, 2,4,4-trimethylhexamethylene diisocyanate, and 1,2-bis(2-isocyanatoethylthio)ethane.

Examples of the alicyclic isocyanate compound include isophorone diisocyanate, 1,3-bis(isocyanatomethyl)cyclohexane, 1,4-bis(isocyanatomethyl)cyclohexane, dicyclohexylmethane-4,4'-diisocyanate (hydrogenated diphenylmethane diisocyanate), norbornane diisocyanate, 2,5-bis(isocyanatomethyl)-bicyclo[2,2,1]-heptane, and 2,6-bis(isocyanatomethyl)-bicyclo[2,2,1]-heptane.

Examples of the aromatic isocyanate compound include xylene diisocyanate (o-, m-, p-), toluene-2,4-diisocyanate, toluene-2,6-diisocyanate, 1,3-bis(isocyanatomethyl)cyclohexane, 1,4-bis(isocyanatomethyl)cyclohexane, and 4,4'-diphenylmethane diisocyanate.

Examples of the aliphatic isothiocyanate compound include hexamethylene diisothiocyanate, 1,2-diisothiocyanatoethane, 1,3-diisothiocyanatopropane, 1,4-diisothiocyanatobutane, 1,6-diisothiocyanatohexane, 2,4,4-trimethylhexamethylene diisothiocyanate, thiobis(3-isothiocyanatopropane), thiobis(2-isothiocyanatoethane), and dithiobis(2-isothiocyanatoethane).

Examples of the alicyclic isothiocyanate compound include isophorone diisothiocyanate, cyclohexane diisothiocyanate, 2,4-bis(isothiocyanatomethyl)norbornane, 2,5-bis(isothiocyanatomethyl)norbornane, 2,6-bis(isothiocyanatomethyl)norbornane, 3,5-bis(isothiocyanatomethyl)norbornane, and norbornane diisothiocyanate.

Examples of the aromatic isothiocyanate compound include p-phenylenediisopropylidene diisothiocyanate, 1,2-diisothiocyanatobenzene, 1,3-diisothiocyanatobenzene, 1,4-diisothiocyanatobenzene, 2,4-diisothiocyanatotoluene, xylene diisothiocyanate (o-, m-, p-), 2,4-tolylene diisothiocyanate, 2,6-tolylene diisothiocyanate, 1,1'-methylenebis(4-isothiocyanatobenzene), 1,1'-methylenebis(4-isothiocyanato-2-methylbenzene), and 1,1'-methylenebis(4-isothiocyanato-3-methylbenzene).

### First Polyfunctional Active Hydrogen Compound

The first polyfunctional active hydrogen compound has two or more active hydrogen groups. The first polyfunctional active hydrogen compound preferably has two active hydrogen groups. The active hydrogen group includes at least one selected from the group consisting of a hydroxyl group, an amino group, a carboxy group, and a thiol group. For example, the first polyfunctional active hydrogen compound includes at least one selected from the group consisting of a polyol compound having two or more hydroxyl groups, a polyamine compound having two or more amino groups, a dicarboxylic acid having two carboxy groups, and a polythiol compound having two or more thiol groups. A single first polyfunctional active hydrogen compound or a mixture of two or more first polyfunctional active hydrogen compounds may be used.

The first polyfunctional active hydrogen compound preferably includes a polyol compound. Such a polyol compound can form a (thio)urethane bond-containing first prepolymer. The repeating structural moiety of the polyol compound can contribute to forming an adhesive layer having a matrix that is less likely to hinder the photochromic compound from changing its structure. The polyol compound will tend to form a laminate having high photochromic performance.

The polyol compound preferably has a number-average molecular weight of 500 or more and 3,000 or less. With a number-average molecular weight in such a range, the polyol compound will tend to form the second prepolymer or the first polymer with a desired number-average molecular weight. The polyol compound more preferably has a number-average molecular weight of 800 or more and 2,000 or less.

The polyol compound may include at least one selected from the group consisting of a polyether polyol, a polyester polyol, a polycarbonate polyol, and a polycaprolactone polyol. The polyol compound preferably includes a polycarbonate polyol. The polycarbonate polyol will tend to form a laminate with a high bonding ability.

The polycarbonate polyol can be obtained, for example, by mono-phosgenation of a low molecular weight polyol or by transesterification of ethylene carbonate, diethyl carbonate, and diphenyl carbonate. Examples of the low molecular weight polyol include ethylene glycol, 1,2-propanediol, 1,3-propanediol, 2-methyl-1,3-propanediol, 1,2-butanediol, 1,3-butanediol, 1,4-butanediol, 1,5-pentanediol, 1,6-hexanediol, 1,8-octanediol, 1,9-nonanediol, 1,10-decanediol, 3-methyl-1,5-pentanediol, 2-ethyl-4-butyl-1,3-propanediol, diethylene glycol, dipropylene glycol, neopentyl glycol, cyclohexane-1,4-diol, cyclohexane-1,4-dimethanol, dimer acid diol, ethylene oxide or propylene oxide adducts of bisphenol A, bis(β-hydroxyethyl)benzene, xylylene glycol, glycerin, trimethylolpropane, and pentaerythritol.

Examples of the polycarbonate polyol that may be used include Duranol^{®} series manufactured by Asahi Kasei Corporation, Kuraray Polyol^{®} series manufactured by Kuraray Co., Ltd., Placcel^{®} series manufactured by Daicel Corporation, Nippolan^{®} series manufactured by Tosoh Corporation, and ETERNACOLL^{®} series manufactured by UBE Corporation.

The polycaprolactone polyol is obtained, for example, by ring-opening polymerization of ε-caprolactone. Examples of the polycaprolactone polyol that may be used include Placcel^{®} series manufactured by Daicel Corporation.

The polyether polyol is obtained, for example, by the reaction of alkylene oxide with a compound having two or more active hydrogen groups in the molecule. Examples of the compound having two or more active hydrogen groups include water, ethylene glycol, propylene glycol, butanediol, glycerin, trimethylolpropane, hexanetriol, triethanolamine, diglycerin, pentaerythritol, trimethylolpropane, and hexanetriol. Examples of the alkylene oxide include cyclic ether compounds such as ethylene oxide, propylene oxide, and tetrahydrofuran.

Examples of the polyether polyol include Excenol^{®} series and Emulstar^{®} series manufactured by AGC Inc. and ADEKA POLYETHER series manufactured by ADEKA Corporation.

The polyester polyol is obtained, for example, by the condensation reaction of a polyhydric alcohol with a polybasic acid. Examples of the polyhydric alcohol includes ethylene glycol, 1,2-propanediol, 1,3-butanediol, 1,4-butanediol, 3-methyl-1,5-pentanediol, 1,6-hexanediol, 3,3'-dimethylolheptane, 1,4-cyclohexanedimethanol, neopentyl glycol, 3,3-bis(hydroxymethyl)heptane, diethylene glycol, dipropylene glycol, glycerin, and trimethylolpropane. Examples of the polybasic acid include succinic acid, adipic acid, azelaic acid, sebacic acid, dodecanedicarboxylic acid, cyclopentanedicarboxylic acid, cyclohexanedicarboxylic acid, orthophthalic acid, isophthalic acid, terephthalic acid, and naphthalenedicarboxylic acid.

Examples of the polyester polyol that may be used include POLYLITE^{®} series manufactured by DIC Corporation, Nippolan^{®} series manufactured by Tosoh Corporation, and MAXIMOL^{®} series manufactured by Air Water Performance Chemical Inc.

The polythiol compound may include at least one selected from the group consisting of an aliphatic polythiol, an aromatic polythiol, and a polythiol having a sulfur atom in addition to that in the mercapto group.

Examples of the aliphatic polythiol include methanedithiol, 1,2-ethanedithiol, 1,1-propanedithiol, 1,2-propanedithiol, 1,3-propanedithiol, 2,2-propanedithiol, 1,6-hexanedithiol, 1,2,3-propanetrithiol, tetrakis(mercaptomethyl)methane, 1,1-cyclohexanedithiol, 1,2-cyclohexanedithiol, 2,2-dimethylpropane-1,3-dithiol, 3,4-dimethoxybutane-1,2-dithiol, 2-methylcyclohexane-2,3-dithiol, 1,1-bis(mercaptomethyl)cyclohexane, thiomalic acid bis(2-mercaptoethyl ester), 2,3-dimercaptosuccinic acid (2-mercaptoethyl ester), 2,3-dimercapto-1-propanol (2-mercaptoacetate), 2,3-dimercapto-1-propanol (3-mercaptoacetate), diethylene glycol bis(2-mercaptoacetate), diethylene glycol bis(3-mercaptopropionate), 1,2-dimercaptopropyl methyl ether, 2,3-dimercaptopropyl methyl ether, and 2,2-bis(mercaptomethyl)-1,3-propanedithiol.

Examples of the aromatic polythiol include 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,3- bis(mercaptoethyl)benzene, 1,4-bis(mercaptoethyl)benzene, 1,2-bis(mercaptomethoxy)benzene, 1,3-bis(mercaptomethoxy)benzene, 1,4-bis(mercaptomethoxy)benzene, 1,2-bis(mercaptoethoxy)benzene, 1,3-bis(mercaptoethoxy)benzene, 1,4-bis(mercaptoethoxy)benzene, 1,2,3-trimercaptobenzene, 1,2,4-trimercaptobenzene, 1,3,5-trimercaptobenzene, 1,2,3-tris(mercaptomethyl)benzene, 1,2,4-tris(mercaptomethyl)benzene, 1,3,5-tris(mercaptomethyl)benzene, 1,2,3-tris(mercaptoethyl)benzene, 1,2,4-tris(mercaptoethyl)benzene, 1,3,5-tris(mercaptoethyl)benzene, 1,2,3-tris(mercaptomethoxy)benzene, 1,2,4-tris(mercaptomethoxy)benzene, 1,3,5-tris(mercaptomethoxy)benzene, 1,2,3-tris(mercaptoethoxy)benzene, 1,2,4-tris(mercaptoethoxy)benzene, 1,3,5-tris(mercaptoethoxy)benzene, 1,2,3,4-tetramercaptobenzene, 1,2,3,5-tetramercaptobenzene, 1,2,4,5-tetramercaptobenzene, and 1,2,3,4-tetrakis(mercaptomethyl)benzene.

Examples of the polythiol having a sulfur atom in addition to that in the mercapto group include bis(mercaptomethyl) sulfide, bis(mercaptoethyl) sulfide, bis(mercaptopropyl) sulfide, bis(mercaptomethylthio)methane, bis(2-mercaptoethylthio)methane, bis(3-mercaptopropylthio)methane, 1,2-bis(2-mercaptomethylthio)ethane, 1,2-bis(2-mercaptoethylthio)ethane, 1,2-bis(3-mercaptopropylthio)ethane, 1,3-bis(mercaptomethylthio)propane, 1,3-bis(2-mercaptoethylthio)propane, 1,3-bis(3-mercaptopropylthio)propane, 1,2-bis(2-mercaptoethylthio)-3-mercaptopropane, 2-mercaptoethylthio-1,3-propanedithiol, 1,2,3-tris(mercaptomethylthio)propane, and 1,2,3-tris(2-mercaptoethylthio)propane.

The amount of the first polyfunctional active hydrogen compound is preferably adjusted so that the ratio M11/M12 is 0.30 or more and 0.90 or less, in which M11 is the molar amount of the active hydrogen group in the first polyfunctional active hydrogen compound, and M12 is the molar amount of the iso(thio)cyanate group in the first iso(thio)cyanate compound. When the ratio M11/M12 is within the above range, the resulting first prepolymer can have a sufficient amount of at least one of the urethane bond or the urea bond and can form a soft adhesive layer that is less likely to hinder the photochromic compound from changing its structure. The ratio M11/M12 is preferably 0.40 or more and 0.850 or less, more preferably 0.50 or more and 0.80 or less.

The ratio S1/S2 of the mass S1 of the first polyfunctional active hydrogen compound to the mass S2 of the first iso(thio)cyanate compound is preferably 0.1 or more and 10 or less. When the ratio S1/S2 is within the above range, the resulting second prepolymer can have a sufficient amount of isocyanate groups per unit mass. The ratio S1/S2 is preferably 0.8 or more and 5 or less, more preferably 1 or more and 4 or less.

### Second Polyfunctional Active Hydrogen Compound

The second polyfunctional active hydrogen compound has two or more active hydrogen groups. The second polyfunctional active hydrogen compound reacts with the first prepolymer to form the second prepolymer. The second polyfunctional active hydrogen compound functions as a chain extender to link the first prepolymer molecules. The second polyfunctional active hydrogen compound preferably has two active hydrogen groups. The second polyfunctional active hydrogen compound may be any one of the compounds listed for the first polyfunctional active hydrogen compound.

The second polyfunctional active hydrogen compound preferably includes a polyamine. The polyamine can form a (thio)urethan urea bond-containing second prepolymer. Such a second prepolymer will tend to form a laminate with a high bonding ability. The polyamine preferably has a molar mass of 50 or more and 500 or less. With a molar mass in such a range, the polyamine will tend to form the second prepolymer with a desired number-average molecular weight. The polyamine more preferably has a molar mass of 50 or more and 300 or less. The polyamine includes a diamine or a triamine and preferably includes a diamine.

Examples of the polyamine include isophorone diamine, ethylene diamine, 1,2-diaminopropane, 1,3-diaminopropane, 1,2-diaminobutane, 1,3-diaminobutane, 1,4-diaminobutane, 1,5-diaminopentane, 1,6-diaminohexane, piperazine, N,N-bis-(2-aminoethyl)piperazine, bis-(4-aminocyclohexyl)methane, bis-(4-amino-3-butylcyclohexyl)methane, 1,2-, 1,3-, or 1,4-diaminocyclohexane, norbornane diamine, hydrazine, adipic acid dihydrazide, phenylenediamine, 4,4'-diphenylmethanediamine, N,N'-diethylethylenediamine, N,N'-dimethylethylenediamine, N,N'-dipropylethylenediamine, N,N'-dibutylethylenediamine, N-methylethylenediamine, N-ethylethylenediamine, bis(hexamethylene)triamine, and 1,2,5-pentanetriamine.

The polyamine preferably includes at least one selected from the group consisting of isophorone diamine, ethylenediamine, bis-(4-aminocyclohexyl)methane, and 1,6-diaminohexane.

The amount of the second polyfunctional active hydrogen compound is preferably adjusted so that the ratio M13/M14 is 0.21 or more and 0.9 or less, in which M13 is the molar amount of the active hydrogen group in the second polyfunctional active hydrogen compound, and M14 is the molar amount of the iso(thio)cyanate group in the first prepolymer. When the ratio M13/M14 is within the above range, the second prepolymer can be produced in a sufficient amount.

The ratio S3/S4 of the mass S3 of the second polyfunctional active hydrogen compound to the mass S4 of the first prepolymer is preferably 0.01 or more and 0.5 or less. When the ratio S3/S4 is within the above range, the resulting second prepolymer can have a sufficient amount of isocyanate groups per unit mass. The ratio S3/S4 is more preferably 0.05 or more and 0.3 or less.

### First Polymer

The first polymer is a reaction product of the second prepolymer with a monofunctional active hydrogen compound having one active hydrogen group. The first polymer typically has no iso(thio)cyanate group. The first polymer has been modified with a non-reactive functional group at its end. The first polymer includes at least one selected from the group consisting of a urethane polymer, a urea polymer, a urethane-urea polymer, a thiourethane polymer, a thiourea polymer, and a thiourethane-urea polymer.

The first polymer can chemically bond to the second prepolymer and/or the third prepolymer and to hydroxyl groups on the surfaces of the first and second base materials at high temperature to form at least one selected from the group consisting of a (thio)urethane resin, a (thio)urea resin, and a (thio)urethane-urea resin.

The first polymer preferably has a number-average molecular weight of 5,000 or more, more preferably 10,000 or more, even more preferably 13,000 or more. With a high number-average molecular weight, the first polymer will tend to form a laminate with high peel strength. The first polymer preferably has a number-average molecular weight of 50,000 or less, more preferably 40,000 or less, even more preferably 30,000 or less. With an excessively high number-average molecular weight, the first polymer will tend to form a laminate with reduced peel strength. The number-average molecular weight of the first polymer can be measured by the same method as that for the second prepolymer.

The first polymer preferably has a softening point of 90°C or more, more preferably 100°C or more, even more preferably 110°C or more. With a higher softening point, the first polymer will tend to form a laminate with higher heat resistance and higher bonding ability. In an example, the softening point of the first polymer may have an upper limit of 200°C or less, and in another example, it may have an upper limit of 160°C or less, although there is no specific upper limit required. The softening point of the mixture can be measured by the same method as that for the second prepolymer.

The first polymer may exist in the form of a mixture with the second prepolymer. The mixture of the first polymer and the second prepolymer can be obtained through the control of the amount of the monofunctional active hydrogen compound. Specifically, the molar amount M5 of the active hydrogen group in the monofunctional active hydrogen compound and the molar amount M6 of the iso(thio)cyanate group in the second prepolymer may be adjusted such that the ratio M5/M6 is less than 1, so that a mixture of the first polymer and the second prepolymer can be obtained, in which the first polymer is produced by protecting the iso(thio)cyanate group of the second prepolymer with the monofunctional active hydrogen compound. The ratio M5/M6 is preferably 0.75 or more and 0.95 or less.

The mixture preferably has a number-average molecular weight of 5,000 or more, more preferably 10,000 or more, even more preferably 13,000 or more. With a higher number-average molecular weight, the mixture will tend to form a laminate with higher peel strength. The mixture preferably has a number-average molecular weight of 50,000 or less, more preferably 40,000 or less, even more preferably 30,000 or less. With an excessively high number-average molecular weight, the mixture will tend to form a laminate with reduced peel strength. The number-average molecular weight can be measured by the same method as that for the second prepolymer.

The mixture preferably has a softening point of 90°C or more, more preferably 100°C or more, even more preferably 110°C or more. With a higher softening point, the mixture will tend to form a laminate with higher heat resistance and higher bonding ability. In an example, the softening point of the mixture may have an upper limit of 200°C or less, and in another example, it may have an upper limit of 160°C or less, although there is no specific upper limit required. The softening point of the mixture can be measured by the same method as that for the second prepolymer.

When the functional layer-forming composition includes the second combination of the photochromic compound and the polymerizable components including the first polymer and the second prepolymer, the content of the first polymer in the solids of the functional layer-forming composition may be, for example, 75 mass% or more and 95 mass% or less.

The mixture of the first polymer and the second prepolymer may contain a fourth prepolymer. The fourth prepolymer is a compound derived from the second prepolymer by protecting some of the iso(thio)cyanate groups of the second prepolymer with the monofunctional active hydrogen compound with the remaining iso(thio)cyanate groups being unprotected. The fourth prepolymer may have one iso(thio)cyanate group and one monofunctional active hydrogen compound-derived protecting group. The fourth prepolymer has iso(thio)cyanate groups and thus can form a laminate with high bonding ability like the second prepolymer.

The content of the first polymer in the mixture of the first polymer and the second and fourth prepolymers is 1 mass% or more and 40 mass% or less in an example, and 10 mass% or more and 30 mass% or less in another example. The content of the second prepolymer in the mixture is 1 mass% or more and 40 mass% or less in an example, and 10 mass% or more and 30 mass% or less in another example. The content of the fourth prepolymer in the mixture is 1 mass% or more and 80 mass% or less in an example, and 40 mass% or more and 80 mass% or less in another example.

The adhesive layer may be a product resulting from curing of the functional layer-forming composition including the first polymer, the second prepolymer, and the fourth prepolymer or a product resulting from curing of the functional layer-forming composition including the first polymer and the fourth prepolymer.

### Monofunctional Active Hydrogen Compound

The monofunctional active hydrogen compound has one active hydrogen group. The monofunctional active hydrogen compound reacts with the iso(thio)cyanate group of the second prepolymer to form the first polymer, which prevents further reaction from taking place. The active hydrogen group includes at least one selected from the group consisting of a hydroxyl group, an amino group, a carboxyl group, and a thiol group.

The monofunctional active hydrogen compound includes, for example, at least one selected from the group consisting of a monool compound, which has one hydroxyl group, a monoamine compound, which has one amino group, a carboxylic acid having one carboxyl group, and a mono-thiol compound, which has one thiol group. A single monofunctional active hydrogen compound or a mixture of two or more monofunctional active hydrogen compounds may be used.

The monofunctional active hydrogen compound is preferably a monoamine compound. The monoamine compound can form the first polymer having a (thio)urea bond.

The monofunctional active hydrogen compound preferably includes an amine having a 2,2,6,6-pentamethyl-4-piperidyl moiety as represented by Formula (3) below. The 2,2,6,6-pentamethyl-4-piperidyl moiety-containing amine can function as a hindered amine and thus can form a laminate with high light stability.

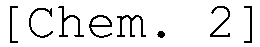

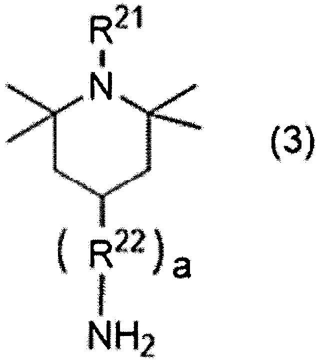

In Formula (3), R²¹ is a hydrogen atom or an alkyl group having 1 to 3 carbon atoms;
R²² is an alkylene group having 1 to 3 carbon atoms; and
a is 0 or 1.

The monofunctional active hydrogen compound is preferably 1,2,2,6,6-pentamethyl-4-aminopiperidine, in which R²¹ is a methyl group and a is 0.

The ratio S5/S6 of the mass S5 of the monofunctional active hydrogen compound to the mass S6 of the second prepolymer is preferably 0.001 or more and 0.100 or less. With the ratio S5/S6 in the above range, the monofunctional active hydrogen compound and the second prepolymer can form the first prepolymer having a sufficient amount of isocyanate groups per unit mass. The ratio S5/S6 is preferably 0.010 or more and 0.030 or less.

### Third Prepolymer

The third prepolymer is a compound that is a reaction product of the first polyfunctional active hydrogen compound with the first iso(thio)cyanate compound and has two or more iso(thio)cyanate groups. In other words, the third prepolymer is a compound similar to the first prepolymer. At high temperature, the third prepolymer can chemically bond to the first prepolymer and the hydroxyl groups on the surfaces of the first and second base materials to form at least one selected from the group consisting of a (thio)urethane resin, a (thio)urea resin, and a (thio)urethane-urea resin.

In a case where the functional layer-forming composition includes the third or fourth combination of the photochromic compound and the polymerizable components including the first polymer and the third prepolymer, the content of the third prepolymer in the solids of the functional layer-forming composition is, for example, 5 mass% or more and 20 mass% or less.

### Additive

The functional layer-forming composition may contain, for example, at least one additive selected from the group consisting of a polymerization catalyst, a polymerization initiator, an antistatic agent, an internal mold release agent, an antioxidant, a light stabilizer, an anti-discoloration agent, a fluorescent dye, a dye, a pigment, a fragrance, a solvent, a leveling agent, and a resin modifier. The functional layer-forming composition preferably contains at least one of an antioxidant or a leveling agent.

Examples of the antioxidant that may be used include 2,6-di-tert-butyl-4-methyl-phenol, IRGANOX 245 manufactured by BASF Japan Ltd. (ethylenebis(oxyethylene)bis[3,5-tert-butyl-4-hydroxy-m-tolyl]propionate]), IRGANOX 1076 manufactured by BASF Japan Ltd. (octadecyl-3-(3,5-di-tert-butyl-4-hydroxyphenyl)propionate), IRGANOX 1010 manufactured by BASF Japan Ltd. (pentaerythritol tetrakis[3-(3,5-di-tert-butyl-4-hydroxyphenyl)propionate]), and IRGANOX 1035, 1075, 104, 3790, 5057, and 565 manufactured by BASF Japan Ltd.

The leveling agent may be a silicone surfactant or a fluorine-containing surfactant. Specifically, the leveling agent may be L-7001, L-7002, L-7604, or FZ-2123 manufactured by Dow Toray Co., Ltd., MEGAFACE F-470, MEGAFACE F-1405, or MEGAFACE F-479 manufactured by DIC Corporation, or Fluorad FC-430 manufactured by 3M Japan Co., Ltd.

The light stabilizer may be a commercially available product and is preferably a hindered amine compound having a 2,2,6,6-tetramethyl-4-piperidyl skeleton. Examples include bis(2,2,6,6-tetramethyl-4-piperidyl) sebacate, bis(1,2,2,6,6-pentamethyl-4-piperidyl) sebacate, bis(1-octyloxy-2,2,6,6-tetramethyl-4-piperidyl) sebacate, 1-[2-{3-(3,5-di-tert-butyl-4-hydroxyphenyl)propionyloxy}ethyl]-4-{3-(3,5-di-tert-butyl-4-hydroxyphenyl)propionyloxy}-2,2,6,6-tetramethylpiperidine, 4-benzoyloxy-2,2,6,6-tetramethylpiperidine, methyl (1,2,2,6,6-pentamethyl-4-piperidyl)sebacate, 1,2,2,6,6-pentamethyl-4-piperidinyl methacrylate, 2-[[3,5-bis(1,1-dimethylethyl)-4-hydroxyphenyl]methyl]-2-butylpropanedioic acid [1,2,2,6,6-pentamethyl-4-piperidinyl], poly[{6-(1,1,3,3-tetramethylbutyl)amino-1,3,5-triazin-2,4-diyl}{(2,2,6,6-tetramethyl-4-piperidyl)imino}hexamethylene{ (2,2,6,6-tetramethyl-4-piperidyl)imino}], and 1,2,2,6,6-pentamethyl-4-piperidyl methacrylate. Examples of product names include ADEKA STAB^{®} LA series (e.g., LA-52, LA-57, LA-63P, LA-68, LA-72, LA-77Y, LA-81, LA-82) manufactured by ADEKA Corporation, TINUVIN^{®} series (e.g., TINUVIN 123, TINUVIN 171, TINUVIN 249, TINUVIN 292, TINUVIN 765, TINUVIN 622SF) manufactured by BASF Japan Ltd., and Chimassorb^{®} series (e.g., Chimassorb 2020FDL, Chimassorb 944FDL) manufactured by BASF Japan Ltd.

The content of the additive in the solids of the functional layer-forming composition is, for example, 0.1 mass% or more and 1 mass% or less.

### Organic Solvent

The functional layer-forming composition may contain an organic solvent for adjusting its viscosity. The organic solvent may include at least one selected from the group consisting of tetrahydrofuran, diethyl ketone, tert-butyl alcohol, isopropyl alcohol, propylene glycol monomethyl ether, toluene, ethyl acetate, and cyclohexanone.

The content of the organic solvent in the functional layer-forming composition is, for example, 30 mass% or more and 80 mass% or less.

### Method for Producing the Functional Layer-Forming Composition

The functional layer-forming composition may be produced, for example, by one of first to fifth methods described below.

A first method for producing the functional layer-forming composition includes reacting the first polyfunctional active hydrogen compound with the first iso(thio)cyanate compound to form the first prepolymer; reacting the first prepolymer with the second polyfunctional active hydrogen compound to form the second prepolymer; and mixing the second prepolymer with the functional colorant and any optional additive.

A second method for producing the functional layer-forming composition includes reacting the first polyfunctional active hydrogen compound with the first iso(thio)cyanate compound to form the first prepolymer; reacting the first prepolymer with the second polyfunctional active hydrogen compound to form the second prepolymer; reacting the second prepolymer with the monofunctional active hydrogen compound to form the mixture of the first polymer and the second prepolymer; and mixing the first polymer, the second prepolymer, the functional colorant, and any optional additive.

A third method for producing the functional layer-forming composition includes reacting the first polyfunctional active hydrogen compound with the first iso(thio)cyanate compound to form the first prepolymer and the third prepolymer; reacting the first prepolymer with the second polyfunctional active hydrogen compound to form the second prepolymer; reacting the second prepolymer with the monofunctional active hydrogen compound to form the first polymer; and mixing the first polymer, the third prepolymer, the functional colorant, and any optional additive.

A fourth method for producing the functional layer-forming composition includes reacting the first polyfunctional active hydrogen compound with the first iso(thio)cyanate compound to form the first prepolymer; reacting the first prepolymer with the second polyfunctional active hydrogen compound to form the second prepolymer; reacting the second prepolymer with the monofunctional active hydrogen compound to form the mixture of the first polymer, the second prepolymer, and the fourth prepolymer; and mixing the first polymer, the second prepolymer, the fourth prepolymer, the functional colorant, and any optional additive.

A fifth method for producing the functional layer-forming composition includes reacting the first polyfunctional active hydrogen compound with the first iso(thio)cyanate compound to form the first prepolymer; reacting the first prepolymer with the second polyfunctional active hydrogen compound to form the second prepolymer; reacting the second prepolymer with the monofunctional active hydrogen compound to form the first polymer; and mixing the first polymer, the functional colorant, and any optional additive.

The reaction of the first polyfunctional active hydrogen compound with the first iso(thio)cyanate compound is preferably carried out in the presence of an organic solvent. The organic solvent may be any of those listed above. The reaction is preferably carried out in a nitrogen atmosphere. The reaction is carried out, for example, at a reaction temperature of 60°C or more and 150°C or less for a period of 3 hours or more and 10 hours or less. The reaction is preferably carried out until the endpoint is reached, which is determined by back titration of isocyanate groups.

The reaction of the first prepolymer with the second polyfunctional active hydrogen compound is preferably carried out in the presence of an organic solvent. The organic solvent may be any of those listed above. The reaction is preferably carried out in a nitrogen atmosphere. The reaction is carried out, for example, at a reaction temperature of 10°C or more and 30°C or less for a period of 0.1 hours or more and 5 hours or less.

The reaction of the second prepolymer with the monofunctional active hydrogen compound is preferably carried out in the presence of an organic solvent. The organic solvent may be any of those listed above. The reaction is preferably carried out in a nitrogen atmosphere. The reaction is carried out, for example, at a reaction temperature of -10°C or more and 10°C or less for a period of 0.1 hours or more and 5 hours or less. The functional layer-forming composition according to the present invention preferably includes the first combination of the functional colorant and the polymerizable component including only the second prepolymer.

### First and Second Adhesive Layers

For example, the first and second adhesive layers may each have a thickness of 1 µm or more. The first or second adhesive layer with a larger thickness will tend to provide higher adhesion between the functional layer and the first or second optical base material. The first and second adhesive layers each preferably have a thickness of 3 µm or more, more preferably 5 µm or more. The first and second adhesive layers with an excessively large thickness, however, may tend to form a laminate with a degraded appearance. The first and second adhesive layers each preferably have a thickness of 50 µm or less, more preferably 30 µm or less, even more preferably 20 µm or less. The first and second adhesive layers may each have a thickness of 10 µm or less or a thickness of 8 µm or less.

At least one of the first or second adhesive layer includes at least one polyvinyl resin selected from the group consisting of a polyvinyl alcohol resin and a modified polyvinyl alcohol resin. The type of resin in the first and second adhesive layers can be identified using gas chromatography or Fourier transform infrared spectroscopy (FT-IR).

As used herein, the term "polyvinyl alcohol (PVA) resin" is intended to include fully-hydrolyzed polyvinyl alcohol resin, which has only hydroxyl groups as side chains, and partially-hydrolyzed polyvinyl alcohol resin, which has hydroxyl groups and acetate groups as side chains. For example, the fully-hydrolyzed polyvinyl alcohol resin may have repeating units represented by -[CH₂CH(OH)]ₙ-. For example, the fully-hydrolyzed polyvinyl alcohol resin has a degree of hydrolysis of 98 mol% or more and 100 mol% or less. For example, the partially-hydrolyzed polyvinyl alcohol resin may have repeating units represented by -[CH₂CH(OH)]ₙ-[CH₂CH(OCOCH₃)]ₘ-. For example, the partially-hydrolyzed polyvinyl alcohol resin has a degree of hydrolysis of 40 mol% or more and 97 mol% or less. The degree of hydrolysis of PVA resin may be measured by a method according to Japanese Industrial Standards (JIS) K 6726:1994. Specifically, the degree (mol%) of hydrolysis of PVA resin may be measured by a dissolution-titration method that includes determining the amount of the remaining acetate groups in the sample using sodium hydroxide to determine the degree (mol%) of hydrolysis.

The term "modified polyvinyl alcohol resin" means polyvinyl alcohol resin having an introduced functional group, other than hydroxyl and acetate groups, in its side chain. The introduced functional group preferably has high hydrophobicity. The PVA resin with an introduced hydrophobic functional group can enhance the performance of the functional colorant. Such a functional group other than hydroxyl and acetate groups may be, for example, at least one selected from the group consisting of a butyral group, an acetoacetyl group, a quaternary ammonium group, a sulfo group, a carboxy group, an ethylene oxide group (-[CH₂CH₂O]ₓ-H), and an alkyl group. The quaternary ammonium group, the sulfo group, or the carboxy group may form a salt. For example, the modified polyvinyl alcohol resin may have repeating units represented by - [CH₂CH(OH)]ₙ-[CH₂CH(OCOCH₃)]ₘ-[CH₂CH(OX)]ₗ. In the formula, X is a monovalent functional group other than hydroxyl and acetate groups. X may be, for example, an acetoacetyl group, a quaternary ammonium group, a sulfo group, a carboxyl group, an ethylene oxide group, an alkyl group, or an amino group. For example, the modified polyvinyl alcohol resin may have a degree of hydrolysis of 40 mol% or more and 99 mol% or less. The polyvinyl resin may also be a copolymer of vinyl alcohol and any additional monomer. The additional monomer may be, for example, vinylamine.

The PVA resin may be partially-hydrolyzed PVA resin, fully-hydrolyzed PVA resin, or modified PVA resin. The partially-hydrolyzed PVA resin may have a degree of hydrolysis of 60 mol% or more and 97 mol% or less, 70 mol% or more and 95 mol% or less, or 80 mol% or more and 90 mol% or less. The modified PVA resin may have a degree of hydrolysis of 40 mol% or more and 99 mol% or less.

The PVA resin preferably includes at least one polyvinyl resin selected from the group consisting of a polyvinyl alcohol resin, a polyvinyl butyral resin, an acetoacetylated polyvinyl alcohol resin, and an amine-functionalized polyvinyl alcohol resin.

For example, the PVA resin has a number-average molecular weight of 10,000 or more and 200,000 or less. The PVA resin preferably has a number-average molecular weight of 20,000 or more and 180,000 or less, more preferably 30,000 or more and 150,000 or less, even more preferably 50,000 or more and 110,000 or less. The number-average molecular weight of the PVA resin can be measured using gel permeation chromatography (GPC). The PVA resin typically has an average degree of polymerization of 100 or more and 10,000 or less, preferably 500 or more and 8,000 or less, more preferably 1,000 or more and 5,000 or less. The PVA resin may have an average degree of polymerization of 1,200 or more and 2,000 or less. The average degree of polymerization of the PVA resin can be determined by a method according to Japanese Industrial Standards (JIS) K 6726:1994.

The first and second adhesive layers may be formed by a process that includes applying the adhesive layer-forming composition (described below) to at least one surface of each of the first and second optical base materials; and curing the composition. The first and second adhesive layers are typically non-self-supported films.

### Adhesive Layer-Forming Composition

The adhesive layer-forming composition may include at least one resin selected from the group consisting of the polyvinyl alcohol resin and the modified polyvinyl alcohol resin; and water or an organic solvent capable of dissolving or dispersing the resin. Water may be distilled water, pure water, ion-exchanged water, or tap water.

The adhesive layer-forming composition preferably contains at least one polyvinyl resin selected from the group consisting of a polyvinyl alcohol resin, a polyvinyl butyral resin, an acetoacetylated polyvinyl alcohol resin, and an amine-functionalized polyvinyl alcohol resin, and more preferably contains a polyvinyl alcohol resin.

The organic solvent may be, for example, at least one selected from the group consisting of methyl ethyl ketone, toluene, methanol, ethanol, n-propanol, isopropanol, acetone, phenol, diethyl ketone, xylene, dimethyl sulfoxide, dimethylformamide, ethylenediamine, and diethylenetriamine. A mixture of water and an organic solvent may also be used.

The adhesive layer-forming composition typically has a resin content of 1 mass% or more and 50 mass% or less, preferably 5 mass% or more and 30 mass% or less, more preferably 8 mass% or more and 15 mass% or less.

The adhesive layer-forming composition may further contain a first compound having at least one functional group selected from the group consisting of an acryloyl group, a methacryloyl group, and a vinyl group.

The first compound having a (meth)acryloyl group is, for example, a monofunctional (meth)acrylate having one (meth)acryloyl group. The monofunctional (meth)acrylate preferably has at least one functional group selected from the group consisting of an epoxy group, an oxetanyl group, a vinyl group, an alkoxy group, an isocyanate group (-N=C=O), an isothiocyanate group (-N=C=S), and an aldehyde group. The monofunctional (meth)acrylate with such a functional group will tend to form an adhesive layer with high bonding ability.

Examples of the monofunctional (meth)acrylate include methoxypolyethylene glycol methacrylate, methoxypolyethylene glycol methacrylate, methoxypolyethylene glycol acrylate, methoxypolyethylene glycol acrylate, stearyl methacrylate, lauryl methacrylate, methyl acrylate, ethyl acrylate, butyl acrylate, octyl acrylate, lauryl acrylate, γ-methacryloyloxypropyl trimethoxysilane, and γ-methacryloyloxypropyl methyldimethoxysilane.

The adhesive layer-forming composition typically has a first compound content of 0.05 mass% or more and 5 mass% or less, preferably 0.1 mass% or more and 1 mass% or less. With a high first compound content, the adhesive layer-forming composition will tend to form an adhesive layer with high bonding ability. With a low first compound content, the adhesive layer-forming composition will tend to form a laminate with improved appearance.

The polyvinyl alcohol resin may be a commercially available product, such as Kuraray Poval 22-88 (partially-hydrolyzed product), 28-98 (fully-hydrolyzed product), and RS-2117 (fully-hydrolyzed product) manufactured by Kuraray Co., Ltd. It may also be Ultiloc 5003 (fully-hydrolyzed, amine-functionalized polyvinyl alcohol) manufactured by Sekisui Chemical Co., Ltd. The adhesive layer-forming composition can be prepared, for example, by dissolving a commercially available polyvinyl alcohol resin in distilled water.

### Manufacturing Method

A method for manufacturing the laminate according to an embodiment may include, for example, applying the adhesive layer-forming composition to at least one main surface of each of the first and second optical base materials; drying the composition to form a first coating film and a second coating film; applying the functional layer-forming composition to a support to form a third coating film; removing the third coating film from the support; placing the third coating film on the first coating film on the first optical base material; stacking the first and second optical base materials to form a first structure with the second coating film placed on the third coating film on the first coating film on the first optical base material; and heating the first structure to cure the first, second, and third coating films. Alternatively, the functional layer-forming composition may be applied directly to the first coating film and then dried to form the third coating film.

Hereinafter, the method for manufacturing the laminate will be described in detail.

First, the adhesive layer-forming composition is applied to the second main surface of each of the first and second optical base materials using, for example, a bar coater to form a coating film. The coating film is dried at a temperature of 70°C or more and 150°C or less for 1 minute or more and 5 hours or less. This process results in the formation of: a first coating film on one main surface of the first optical base material; and a second coating film on one main surface of the second optical base material.

Next, the functional layer-forming composition is applied to a support to form a coating film. The coating film is dried at a temperature of 70°C or more and 150°C or less for 1 minute or more and 1 hour or less. This results in the formation of a third coating film. The third coating film is removed from the support and then placed on the first coating film on the first optical base material. This results in the formation of a structure including the first optical base material, the first coating film, and the third coating film stacked in this order.

Next, the third coating film and the second coating film on the second optical base material are stacked and bonded together. This results in the formation of a first structure including the first optical base material, the first coating film, the third coating film, the second coating film, and the second optical base material, which are stacked in this order.

Next, the first structure is heated so that the first to third coating films are cured. This results in the formation of a laminate including the first and second optical base materials bonded together with a first adhesive layer, a functional layer, and a second adhesive layer between them. For example, the first structure is heated at a temperature of 40°C or more and 160°C or less for 1 minute or more and 10 hours or less.

The resulting laminate may be subjected to degassing. During the degassing, for example, the laminate is allowed to stand under a vacuum of 500 Pa at a temperature of 40°C or more and 80°C or less for 5 hours or more and 20 hours or less. After being degassed, the structure may be further heated.

### Support

The laminate according to an embodiment may further include a support. The support may be located between the functional layer and the first or second adhesive layer or located between the first or second adhesive layer and the first or second optical base material. The support can further enhance the shape stability of the laminate. The support may be colorless and transparent, white and transparent, or colored and transparent.

The support preferably includes at least one resin selected from the group consisting of polyethylene terephthalate, triacetyl cellulose, polyamide, polycarbonate sheet, cellulose acetate butyrate, and (meth)acrylic resin.

The support preferably has a thickness of 50 µm or more. The thicker the support, the higher the strength of the laminate tends to be. In an example, the thickness of the support may have an upper limit of 1,000 µm or less, and in another example, it may have an upper limit of 500 µm or less, although there is no specific upper limit required.

### Coat Layer-Bearing Laminate

An embodiment is directed to a coat layer-bearing laminate including: the laminate according to an embodiment; and a coat layer. The coat layer covers at least part of the first and second optical base materials. The coat layer includes at least one resin selected from the group consisting of an epoxy resin, an oxetane resin, an acrylic resin, a methacrylic resin, and a urethane resin.

Like the laminate according to an embodiment, the coat layer-bearing laminate may be used as the binder sheet mentioned above. The coat layer-bearing laminate has high processing stability due to its coat layer. The coat layer-bearing laminate also has a high ability to bond to the optical element base material described later.

The coat layer-bearing laminate according to an embodiment preferably has a thickness of 100 µm or more, more preferably 150 µm or more, even more preferably 200 µm or more. With a larger thickness, the coat layer-bearing laminate will tend to have higher shape stability. In an example, the thickness of the coat layer-bearing laminate may have an upper limit of 1,000 µm or less, and in another example, it may have an upper limit of 500 µm or less, although there is no specific upper limit required.

FIG. 2 is a schematic cross-sectional view of an example of the coat layer-bearing laminate according to an embodiment. As shown in FIG. 2, the coat layer-bearing laminate 7 includes the laminate 1, which is shown in FIG. 1; a first coat layer 5 completely covering the first main surface 2a of the first optical base material 2; and s second coat layer 6 completely covering the first main surface 3a of the second optical base material 3. It should be noted that the first and second adhesive layers FA and SA are not shown in FIG. 2. Alternatively, the first coat layer 5 may cover part of the first main surface 2a, and the second coat layer 6 may cover part of the first main surface 3a. One of the first and second coat layers 5 and 6 may be omitted.

### Coat Layer

The coat layer covers at least part of at least one of the surfaces of the first and second optical base materials. Preferably, the coat layers are provided to cover the two surfaces of the first and second optical base materials. Preferably, the coat layers completely cover the entire surfaces of the first and second optical base materials. The coat layers covering a larger area of the surfaces of the first and second optical base materials will tend to provide higher bonding ability to the optical element base material and tend to provide higher shape stability for the laminate.

For example, the coat layer may have a thickness of 5 µm or more. With a larger thickness, the coat layer will tend to provide higher bonding ability to the optical element base material and to provide higher shape stability for the laminate. The coat layer preferably has a thickness of 10 µm or more, more preferably 20 µm or more, even more preferably 25 µm or more. With an excessively large thickness, however, the coat layer may tend to provide a degraded appearance for the laminate. The coat layer preferably has a thickness of 100 µm or less, more preferably 75 µm or less, even more preferably 50 µm or less.

The coat layer includes at least one resin selected from the group consisting of an epoxy resin, an oxetane resin, an acrylic resin, a methacrylic resin, and a urethane resin. The coat layer preferably includes an epoxy resin. The coat layer including an epoxy resin will tend to have a good appearance and a higher ability to bond to the optical element base material. The type of the resin in the coat layer can be identified using gas chromatography or Fourier transform infrared spectroscopy (FT-IR).

The surface of the coat layer preferably has at least one functional group selected from the group consisting of an epoxy group, an acryloyl group, a methacryloyl group, and a vinyl group. The coat layer with such a surface functional group will tend to have a higher ability to bond to the optical element base material. The coat layer preferably contains an epoxy group and at least one functional group selected from the group consisting of an acryloyl group, a methacryloyl group, and a vinyl group. The coat layer with such functional groups can have a higher bonding ability.

The presence of such functional groups on the surface of the coat layer can be confirmed, for example, using Fourier transform infrared spectroscopy (FT-IR). Specifically, the surface having acryloyl, methacryloyl, and vinyl groups will give an IR spectrum with peaks in the range of 1,600 cm⁻¹ or more and 1,680 cm⁻¹ or less and in the range of 790 cm⁻¹ or more and 1,000 cm⁻¹ or less.

The coat layer may be formed, for example, by a process including: applying the adhesive layer-forming composition to at least one of the surfaces of the first and second optical base materials; and curing the composition.

More specifically, the adhesive layer-forming composition is applied to the first main surface of each of the first and second optical base materials and dried, for example, at a temperature of 70°C or more and 150°C or less for 1 minute or more and 1 hour or less. The coat layer-bearing laminate may be produced using the same process as for the laminate described above, except that the first and second optical base materials resulting from the above process are used instead.

### Optical Component

An embodiment is directed to an optical component including the laminate according to an embodiment. The optical component may include the laminate according to an embodiment and an optical element base material covering at least part of the first and second optical base materials. Alternatively, the optical component may include the coat layer-bearing laminate according to an embodiment. The optical component may include the coat layer-bearing laminate according to an embodiment and an optical element base material covering at least part of the coat layer.

Examples of the optical component include binder sheets, lenses, spectacles, windowpanes for houses and automobiles, window films, liquid crystal display components, sun visors, and timepiece components. Lenses include semi-finished lenses and finished lenses.

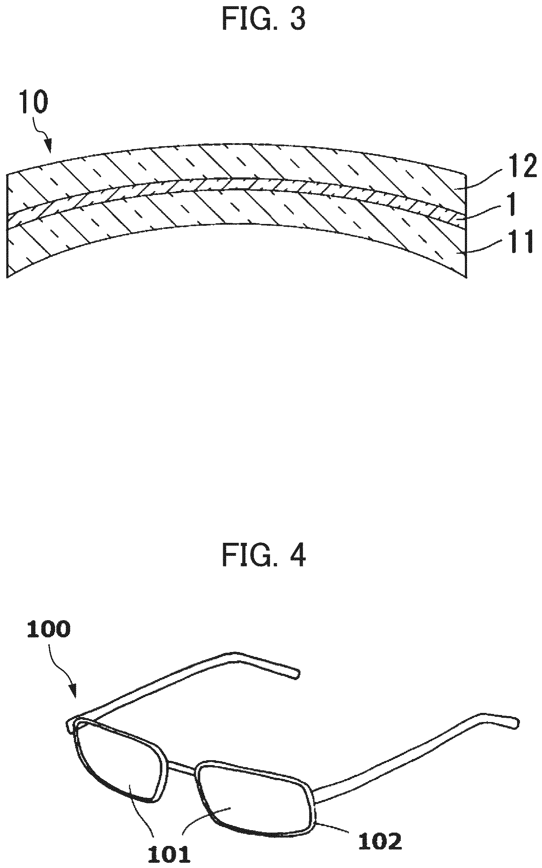

FIG. 3 is a schematic cross-sectional view of an example of the optical component according to an embodiment. As shown in FIG. 3, the optical component 10 includes a first optical element base material 11, a second optical element base material 12, and the laminate 1 (shown in FIG. 1) provided between the first and second optical element base materials 11 and 12. The optical component 10 has a convex-concave lens shape. The laminate 1 has curved surfaces that define the lens shape. The first optical element base material 12 is located on the convex side, and the second optical element base material 11 is located on the concave side. The first optical element base material 12 covers the entire surface of the first optical base material (not shown) of the laminate 1. The second optical element base material 11 covers the entire surface of the second optical base material (not shown) of the laminate 1. The side surfaces of the laminate 1 are not covered by the first and second optical element base materials. Alternatively, the side surfaces of the laminate 1 may be covered by the first and second optical element base materials.

The optical component according to an embodiment may include the coat layer-bearing laminate 7 (shown in FIG. 2) instead of the laminate 1 (shown in FIG. 1). The first optical element base material 12 may cover the entire surface of the first coat layer 5 of the coat layer-bearing laminate 7. The second optical element base material 11 may cover the entire surface of the second coat layer 6 of the coat layer-bearing laminate 7.

FIG. 4 is a schematic perspective view of exemplary spectacles according to an embodiment. As shown in FIG. 4, the spectacles 100 include lenses 101 and a frame 102 that supports the lenses 101. The lenses 101 each include the optical component according to an embodiment.

### Optical Element Base Material

The optical element base material may include a resin. The resin may include at least one selected from the group consisting of a polyester resin, a polyamide resin, an allyl resin, a (meth)acrylic resin, a polyurethane resin, a poly(urethane-urea) resin, a polythiourethane resin, a poly(thiourethane-urea) resin, a polythioepoxy resin, and a polycarbonate resin.

The optical element base material preferably includes an allyl resin, a (meth)acrylic resin, a poly(urethane-urea) resin, a polythiourethane resin, or a polythioepoxy resin. The optical element base material including an allyl resin or a (meth)acrylic resin will tend to have high bonding ability to the optical base material or coat layer of the laminate.

Optical Element Base Material-Forming Curable Composition For example, the optical element base material-forming curable composition may include at least one selected from the group consisting of an ally resin-forming curable composition, a (meth)acrylic resin-forming curable composition, a urethane-urea resin-forming curable composition, a thiourethane resin-forming curable composition, and a thioepoxy resin-forming curable composition.

The (meth)acrylic resin-forming curable composition may include a (meth)acryloyl group-containing (meth)acrylic monomer and a polymerization initiator.

The urethan-urea resin-forming curable composition may include a prepolymer of a polyisocyanate compound and a polyol compound; and a diamine compound. The polyisocyanate compound, the polyol compound, and the diamine compound may each be any of those listed above for the functional layer-forming composition.

The thiourethane resin-forming curable composition may include a polyisocyanate compound, a polythiol compound, and a polymerization catalyst. The polyisocyanate compound may be any of those listed above for the functional layer-forming composition.

The thioepoxy resin-forming curable composition may include a thioepoxy group-containing monomer, a curing agent, and a polymerization catalyst.

The allyl resin- or (meth)acrylic resin-forming curable composition may include an allyl group- or (meth)acryloyl group-containing first monomer and a polymerization initiator. The allyl resin- or (meth)acrylic resin-forming curable composition preferably further includes at least one of a second monomer or an organosilicon compound. The second monomer has a polymerizable group and a first functional group. The polymerizable group is at least one selected from the group consisting of an acryloyl group, a methacryloyl group, and a vinyl group. The first functional group is at least one selected from the group consisting of an isocyanate group, an isothiocyanate group, an epoxy group, an oxetanyl group, and an aldehyde group. The organosilicon compound has a second functional group and a hydrolyzable group. The second functional group is at least one selected from the group consisting of an acryloyl group, a methacryloyl group, and a vinyl group.

Specifically, the polymerizable group of the second monomer is polymerizable with the allyl or (meth)acryloyl group of the first monomer. Alternatively, the polymerizable groups of the second monomer molecules are polymerizable with each other so that they can form a relatively long molecular chain. Such a molecular chain and the first monomer can entangle each other. The first functional group of the second monomer is capable of bonding to the surface of the optical base material. Specifically, the first functional group of the second monomer can react with hydroxyl groups present on the base material surface to form a urethane or thiourethane bond, an ether bond, or an acetal bond. Thus, the polymerizable group of the second monomer can chemically bond to the first monomer or physically catch the first monomer, and the first functional group of the second monomer can bond to the surface of the base material. Thus, the second monomer can cross-link the surface of the base material and the first monomer. Therefore, the curable composition containing the second monomer can form a cured product with high bonding ability to the base material.

The organosilicon compound has a second functional group and a hydrolyzable group. The second functional group is polymerizable with the allyl or (meth)acryloyl group of the first monomer. The hydrolyzable group is reactive with hydroxyl groups present on the base material surface. For example, the hydrolyzable group can undergo dehydration condensation with hydroxyl groups to form siloxane bonds or Si-O-C bonds. Thus, the second functional group of the organosilicon compound can chemically bond to the first monomer, and the hydrolyzable group of the organosilicon compound can bond to the surface of the base material. Thus, the organosilicon compound can cross-link the surface of the base material and the first monomer. Therefore, the curable composition containing the organosilicon compound can form a cured product with high bonding ability to the base material.

The first monomer is a monomer having an allyl group (-CH₂CH=CH₂) or a (meth)acryloyl group (an acryloyl group (-C(=O)-CH=CH₂) or a methacryloyl group (-C(=O)-C(CH₃)=CH₂)). The first monomer may have one or more allyl or (meth)acryloyl groups or both allyl and (meth)acryloyl groups. The first monomer preferably has two allyl or (meth)acryloyl groups. The first monomer preferably has allyl or (meth)acryloyl groups at both ends of its main chain.

When the first monomer has an allyl group, it preferably has a carbonate group (-O-(C=O)-O-). The first monomer may have one or more carbonate groups. The first monomer preferably has two carbonate groups.

Examples of the first monomer having an allyl group include at least one selected from the group consisting of allyl diglycol carbonate, diallyl isophthalate, and diallyl terephthalate. The first monomer preferably includes allyl diglycol carbonate.

The first monomer is preferably a monomer for forming plastic lenses.

The first monomer may be a main component of the curable composition. The first monomer content of the curable composition is typically 50 mass% or more, preferably 75 mass% or more, more preferably 90 mass% or more. With a higher first monomer content, the curable composition will tend to form a cured product with better appearance and higher durability. The first monomer content of the curable composition is typically 99.5 mass% or less, preferably 98 mass% or less. With a lower first monomer content, the curable composition will tend to form a cured product with higher bonding ability to the base material.

The first monomer content of the curable composition may be determined, for example, by isolating the first monomer from the curable composition using silica-gel chromatography or other techniques and measuring the weight of the resulting first monomer or by subjecting the curable composition to gas or liquid chromatography and calculating the first monomer content from the result of the chromatography.

The second monomer has a polymerizable group and a first functional group. The second monomer may have one or more polymerizable groups. The second monomer preferably has one polymerizable group. The second monomer may have one or more first functional groups. The second monomer preferably has one first functional group.

The polymerizable group is at least one selected from the group consisting of an acryloyl group (-C(=O)-CH=CH₂), a methacryloyl group (-C(=O)-C(CH₃)=CH₂), and a vinyl group (-CH=CH₂). The polymerizable group is preferably an acryloyl or methacryloyl group.

The first functional group is at least one selected from the group consisting of an isocyanate group (-N=C=O), an isothiocyanate group (-N=C=S), an epoxy group, an oxetanyl group, and an aldehyde group. The first functional group is preferably at least one selected from the group consisting of an isocyanate group and an isothiocyanate group, and is more preferably an isocyanate group.

The second monomer preferably includes a compound represented by Formula (I) below.

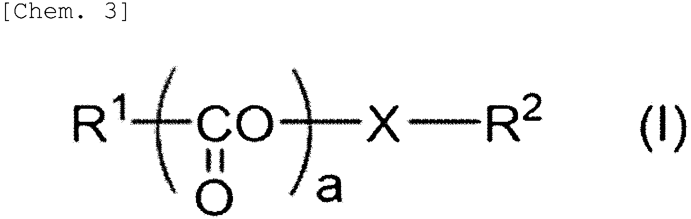

In Formula (I), R¹ is an acryloyl group, a methacryloyl group, or a vinyl group; and
R² is an isocyanate group or an isothiocyanate group.

In Formula (I), X is a linear or branched alkylene group having 1 to 10 carbon atoms or an alkyleneoxyalkylene group having 2 to 10 carbon atoms. The alkylene group preferably has 1 to 5 carbon atoms. The alkylene group is preferably a methylene group or an ethylene group. The alkyleneoxyalkylene group preferably has 2 to 6 carbon atoms. The alkyleneoxyalkylene group is preferably an ethyleneoxyethylene group.

In Formula (I), a is 0 or 1.

Examples of the second monomer include 2-isocyanatoethyl acrylate, 2-isocyanatoethyl methacrylate, allyl isothiocyanate, allyl isocyanate, (3-ethyl-3-oxetanyl)methyl methacrylate, and (3-ethyl-3-oxetanyl)methyl acrylate. The second monomer preferably includes at least one selected from the group consisting of 2-isocyanatoethyl acrylate and 2-isocyanatoethyl methacrylate.

The second monomer content of the curable composition is typically 0.1 mass% or more, preferably 0.5 mass% or more, more preferably 1.0 mass% or more. With a higher second monomer content, the curable composition will tend to form a cured product with higher bonding ability to the base material. The second monomer content of the curable composition is typically 30 mass% or less, preferably 15 mass% or less, more preferably 10 mass% or less. With a lower second monomer content, the curable composition will tend to form a cured product with better appearance.

The ratio M2/M1 of the mass M2 of the second monomer to the mass M1 or the first monomer is preferably 0.005 or more and 0.20 or less, more preferably 0.01 or more and 0.15 or less, even more preferably 0.02 or more and 0.10 or less. With the ratio M2/M1 in such a range, the curable composition will tend to form a cured product with both good appearance and high bonding ability to the base material.

The second monomer content of the curable composition may be determined, for example, by isolating the second monomer from the curable composition using silica-gel chromatography or other techniques and measuring the weight of the resulting second monomer or by subjecting the curable composition to gas or liquid chromatography and calculating the second monomer content from the result of the chromatography. The organosilicon compound has a second functional group and a hydrolyzable group. The second monomer may have one or more second functional groups. The second monomer preferably has one second functional group. The second monomer may have one or more hydrolyzable groups. The second monomer preferably has five or less hydrolyzable groups and more preferably has three or less hydrolyzable groups.

The second functional group is at least one selected from the group consisting of an acryloyl group, a methacryloyl group, and a vinyl group.

The hydrolyzable group includes at least one selected from the group consisting of an alkyloxy group having 1 or more and 3 or less carbon atoms and an alkyloxysilyl group having 1 or more and 3 or less carbon atoms. The hydrolyzable group preferably includes a trialkyloxysilyl group and more preferably includes at least one of a trimethyloxysilyl group ((MeO)₃Si-) or a triethyloxysilyl group ((EtO)₃Si-).

The organosilicon compound preferably includes a compound represented by Formula (2) below.

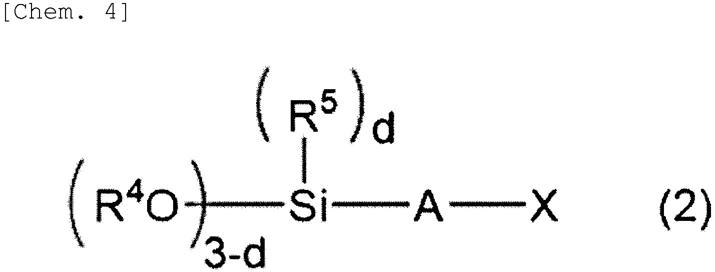

In Formula (2), R⁴ and R⁵ are each an alkyl group having 1 to 3 carbon atoms;
R⁴ and R⁵ are each preferably a methyl group or an ethyl group; d is an integer of 0 to 2; and
d is preferably 0.

In Formula (2), A is an alkylene group having 1 to 10 carbon atoms, an oxyalkylene group having 1 to 10 carbon atoms, an alkyleneoxyalkylene group having 2 to 10 carbon atoms, an aminoalkylene group having 1 to 10 carbon atoms, or a phenylene group. A is preferably an ethylene group, a propylene group, an oxyethylene group, an oxypropylene group, or an alkyleneoxyalkylene group having 3 to 6 carbon atoms and is more preferably a propyleneoxymethylene group.

In Formula (2), X is an acryloyl group, a methacryloyl group, or a vinyl group. X is preferably an acryloyl group or a methacryloyl group.

Examples of the organosilicon compound having a (meth)acryloyl group include γ-methacryloyloxypropyltrimethoxysilane, γ-methacryloyloxypropyltriethoxysilane, γ-methacryloyloxypropylmethyldimethoxysilane, (3-acryloxypropyl)dimethylmethoxysilane, (3-acryloxypropyl)methyldimethoxysilane, (3-acryloxypropyl)trimethoxysilane, methacryloxyethoxytrimethylsilane, (methacryloxymethyl)dimethylethoxysilane, methacryloxymethyl triethoxysilane, methacryloxymethyltrimethoxysilane, methacryloxylpropyl dimethylethoxysilane, methacryloxypropyl dimethylmethoxysilane, and methacryloxypropyl tris(methoxyethoxy)silane.

Examples of the organosilicon compound having a vinyl group include vinyltriethoxysilane, vinyltrimethoxysilane, vinyl-tris(β-methoxyethoxy)silane, p-styryltrimethoxysilane, and p-styryltriethoxysilane.

The organosilicon compound may be a commercially available silane coupling agent.

The organosilicon compound content of the curable composition is typically 0.1 mass% or more, preferably 0.5 mass% or more, more preferably 1.0 mass% or more. With a higher organosilicon compound content, the curable composition will tend to form a cured product with higher bonding ability to the base material. The second monomer content of the curable composition is typically 30 mass% or less, preferably 15 mass% or less, more preferably 10 mass% or less. With a lower organosilicon content, the curable composition will tend to form a cured product with better appearance.

The ratio M3/M1 of the mass M3 of the organosilicon compound to the mass M1 of the first monomer is preferably 0.005 or more and 0.20 or less, more preferably 0.01 or more and 0.15 or less, even more preferably 0.02 or more and 0.10 or less. With the ratio M3/M1 in such a range, the curable composition will form a cured product with both good appearance and high bonding ability to the base material.

The organosilicon compound content of the curable composition may be determined, for example, by isolating the organosilicon compound from the curable composition using silica-gel chromatography or other techniques and measuring the weight of the resulting organosilicon compound or by subjecting the curable composition to gas or liquid chromatography and calculating the organosilicon compound content from the result of the chromatography.

The curing composition may contain one or both of the second monomer and the organosilicon compound.

The curable composition may contain an additional component other than the components described above. Such an additional component may be at least one additive selected from the group consisting of a polymerization initiator, a polymerization catalyst, an antistatic agent, an internal mold release agent, an antioxidant, a light stabilizer, an anti-discoloration agent, a fluorescent dye, a dye, a pigment, a fragrance, a solvent, a leveling agent, and a resin modifier, an infrared absorber, an ultraviolet absorber, and a visible light absorber.

The polymerization initiator may be 1,1-azobiscyclohexane carbonate, diisopropyl peroxycarbonate, 1,1'-azobiscyclohexane nitrate, or di-tert-butylperoxide.

The amount of the polymerization initiator in the curable composition is preferably 0.1 parts by mass or more, more preferably 0.5 parts by mass or more, even more preferably 1.0 part by mass or more, based on 100 parts by mass of the first monomer. The amount of the polymerization initiator in the curable composition is preferably 10 parts by mass or less, more preferably 8 parts by mass or less, even more preferably 5 parts by mass or less, based on 100 parts by mass of the first monomer.

The polymerization initiator content of the curable composition is typically 0.1 mass% or more and 10 mass% or less, preferably 0.5 mass% or more and 8 mass% or less, even more preferably 1.0 mass% or more and 5 mass% or less.

The curable composition preferably contains a polymerization catalyst. The curable composition containing a polymerization catalyst will tend to form a cured product with high bonding ability to the base material. The polymerization catalyst is preferably at least one selected from the group consisting of: a catalyst capable of promoting the reaction between a hydroxyl group and the first functional group of the first monomer, such as an isocyanate group (-N=C=O), an isothiocyanate group (-N=C=S), an epoxy group, an oxetanyl group, or an aldehyde group; and a catalyst capable of promoting the hydrolysis of the hydrolyzable group of the organosilicon compound. The curable composition containing such a catalyst can form a cured product that strongly bonds to the base material because the catalyst can promote the reaction between hydroxyl groups on the base material surface and the first functional group of the second monomer or the hydrolyzable group of the organosilicon compound.

Specifically in a case where the second monomer has an isocyanate or isothiocyanate group as the first functional group, the curable composition preferably contains one or both of a urethane or urea reaction catalyst capable of promoting the reaction between the active hydrogen group and the first functional group and an isocyanurate reaction catalyst capable of promoting isocyanurate linkage. Thus, the curable composition preferably contains at least one polymerization catalyst selected from the group consisting of a urethane reaction catalyst, a urea reaction catalyst, and an isocyanurate reaction catalyst, and more preferably contains an isocyanurate reaction catalyst. When formed between the cured product and the base material, (poly)isocyanurate cyclic bonds can further enhance the adhesion between them.

The urethane or urea reaction catalyst may be a tertiary amine, a quaternary ammonium salt, a quaternary phosphonium salt, a Lewis acid, or an organic sulfonic acid. Examples of such catalysts are shown below.

Examples of the tertiary amine include triethylamine, tri-n-propylamine, triisopropylamine, tri-n-butylamine, triisobutylamine, triethylamine, hexamethylenetetramine, N,N-dimethyloctylamine, N,N,N',N'-tetramethyl-1,6-diaminohexane, 4,4'-trimethylenebis(1-methylpiperidine), and 1,8-diazabicyclo[5.4.0]-7-undecene.

Examples of phosphines include trimethylphosphine, triethylphosphine, tri-n-propylphosphine, triisopropylphosphine, tri-n-butylphosphine, triphenylphosphine, tribenzylphosphine, 1,2-bis(diphenylphosphino)ethane, and 1,2-bis(dimethylphosphino)ethane.

Examples of the quaternary ammonium salt include tetramethylammonium bromide, tetrabutylammonium chloride, and tetrabutylammonium bromide.

Example of the quaternary phosphonium salt include tetramethylphosphonium bromide, tetrabutylphosphonium chloride, and tetrabutylphosphonium bromide.

Examples of the Lewis acid include triphenylaluminum, dimethyltin dichloride, dimethyltin bis(isooctyl thioglycolate), dibutyltin dichloride, dibutyltin dilaurate, dibutyltin maleate, dibutyltin maleate polymer, dibutyltin diricinoleate, dibutyltin bis(dodecyl mercaptide), dibutyltin bis(isooctyl thioglycolate), dioctyltin dichloride, dioctyltin maleate, dioctyltin maleate polymer, dioctyltin bis(butyl maleate), dioctyltin dilaurate, dioctyltin diricinoleate, dioctyltin dioleate, dioctyltin di(6-hydroxy)caproate, dioctyltin bis(isooctyl thioglycolate), didodecyltin diricinoleate, and various metal salts, such as copper oleate, copper acetylacetate, iron acetylacetate, iron naphthenate, iron lactate, iron citrate, iron gluconate, potassium octanoate, and 2-ethylhexyl titanate.

Examples of the organic sulfonic acid include methanesulfonic acid, benzenesulfonic acid, and p-toluenesulfonic acid.

The isocyanurate reaction catalyst may be at least one selected from the group consisting of a quaternary ammonium salt, an alkali metal salt, and a tertiary amine. Examples of the quaternary ammonium salt include triethylmethylammonium 2-ethylhexane, trimethyl(2-hydroxypropyl)ammonium 2-ethylhexane salt, and trimethyl(2-hydroxypropyl)ammonium formate. Examples of the alkali metal salt include potassium acetate, potassium octanoate, and potassium 2-ethylhexanoate. Examples of the tertiary amine include N,N,N',N",N''-pentamethyldiethylenetriamine, 1,2-dimethylimidazole, and N,N-dimethylcyclohexylamine. The isocyanurate reaction catalyst is preferably a quaternary ammonium salt.

Examples of the isocyanurate reaction catalyst include POLYCAT^{®} 46 (manufactured by Air Products), TOYOCAT^{®} TRC (manufactured by Tosoh Corporation), TOYOCAT^{®} TRX (manufactured by Tosoh Corporation), TOYOCAT^{®} TRV (manufactured by Tosoh Corporation), TOYOCAT^{®} TR-20 (manufactured by Tosoh Corporation), and U-CAT^{®} 18X (manufactured by San-Apro Ltd.).

The polymerization catalyst content of the curable composition is typically 1 ppm or more and 1,000 ppm or less, preferably 3 ppm or more and 100 ppm or less, more preferably 5 ppm or more and 50 ppm or less.

The curable composition preferably has a viscosity (at 23°C) of 10 to 1,000 mPa·s, more preferably 10 to 500 mPa·s, even more preferably 10 to 100 mPa·s. With a viscosity in such a range, the curable composition can form a cured product with acceptable appearance and optical properties without a reduction in productivity after being charged into a mold. The viscosity of the curable composition is also desired to be within a certain range during the charging. For example, the curable composition preferably satisfies the relation below between its viscosity Vᵢ at the initial charging stage and its viscosity V₃ₕ at 3 hours after the initial charging.

### V₃ₕ < 3Vᵢ

The curable composition satisfying the relation can stably form a cured product during the production process.

### Method for Producing the Optical Component

The optical component according to an embodiment is produced, for example, by the method described below. First, molds and a gasket are provided. The molds include upper and lower molds. The upper and lower molds are combined to form an inner hollow space. The gasket is provided at the interface between the upper and lower molds. The gasket has an inner cutout for fixing the laminate. Instead of the cutout, the gasket may have an inner protrusion or recess. The molds and the gasket are, for example, those known in the art for molding a plastic lens.

The laminate may undergo shaping, such as curving to conform to the mold shape. Specifically, the laminate is placed in a die of a curved surface forming device. The die has a lens shape, such as a hemispherical shape. The die has a hole through its bottom. The hole is connected via piping to a pressure regulator, such as a vacuum pump. The pressure regulator is driven to reduce the pressure in the space between the die and the laminate. As a result, the first optical base material of the laminate is deformed so as to adhere to the bottom surface of the die. During this process, the environmental temperature may be set at 70°C or more and 160°C or less to make the laminate more deformable. After a certain period of time has elapsed, the operation of the pressure regulator is stopped, and the deformed laminate is removed from the die. After the removal, the laminate is cooled, for example, at a temperature of 0°C or more and 40°C or less. The resulting laminate deformed in this way has a curved surface.

The edge of the laminate is then fixed by the insertion of the laminate into the cutout of the gasket. The gasket is placed at the interface between the molds. Thus, the laminate is located across the inner hollow space of the molds. The curable composition for forming the optical element base material is then filled into the inner hollow space of the molds. The molds filled with the curable composition are then heated so that the curable composition is cured. During the heating, for example, the temperature is gradually increased from room temperature to the curing temperature, and after the curing temperature is reached, the temperature is held for a certain period of time. The curing temperature is, for example, 60°C or more and 100°C or less. The rate of temperature increase is, for example, 1°C/hour or more and 10°C/hour or less. The holding time at the curing temperature is, for example, 1 hour or more and 30 hours or less.

After the heating is completed, the cured product is removed from the molds. After the removal, the cured product is heated at a temperature in the range of 60°C or more and 150°C or less for a period of 1 hour or more and 10 hours or less. The resulting product is an optical component including the laminate and optical element base materials that cover the surfaces of the first and second optical base materials of the laminate.

The optical component according to an embodiment may also be obtained by the method described below. First, some of the curable composition is filled into the lower mold. After the filling, the laminate is placed on the surface of the curable composition. The upper mold is then placed to mate with the lower mold so that a hollow space is formed between them. The remainder of the curable composition is filled into the hollow space. The molds are then heated in the same way as described above so that a cured product is obtained. The resulting product is an optical component including the laminate and optical element base materials according to an embodiment which cover the entire main surfaces and side surfaces of the laminate. Alternatively, the optical component according to an embodiment may be obtained by the method described below. First, the laminate is placed along the top surface of a mold. The curable composition is loaded on the surface of the laminate, opposite to its surface in contact with the top surface of the mold, and then heated under the same conditions as shown above so that a first cured product is obtained. The first cured product is placed in a mold. The curable composition is loaded on the uncovered surface of the laminate, opposite to the surface covered by the cured product, and then heated under the same conditions as shown above so that a second cured product is obtained. The resulting product is an optical component including the laminate and optical element base materials which cover the main surfaces and optionally side surfaces of the laminate.

Alternatively, instead of the laminate, the coat layer-bearing laminate may be used.

### EXAMPLES

Hereinafter, the present invention will be described in more detail with reference to some illustrative examples. Such examples are merely for the purpose of illustrating the present invention and not intended to limit the spirit and scope of the present invention.

### Example 1

### Production of First Prepolymer FPP1

A mixture was obtained by adding 100 g of a first isocyanate compound FI1, 315 g of a first polyfunctional active hydrogen compound FA1, and 40 g of an organic solvent OS1 to a 2 L reaction vessel. The first isocyanate compound FI1 was isophorone diisocyanate. The first polyfunctional active hydrogen compound FA1 was a polycarbonate diol with a number-average molecular weight of 1,000. The organic solvent OS1 was diethyl ketone. In a nitrogen atmosphere, the mixture was stirred at 150 rpm and 100°C for 5 hours to form a liquid reaction product containing a first prepolymer. Hereinafter, the first prepolymer is also referred to as the first prepolymer FPP1. The endpoint of the reaction was determined by back titration of isocyanate groups.

### Production of Second Prepolymer SPP1

After 560 g of the organic solvent OS1 and 150 g of an organic solvent OS2 were added at 10°C to the liquid reaction product containing the first prepolymer FPP1, the solution temperature was held at 15°C. The organic solvent OS2 was tert-butyl alcohol. To the liquid reaction product was added dropwise 21.3 g of a second polyfunctional active hydrogen compound SA1, and reacted at 15°C for 1 hour to form a liquid reaction product containing a second prepolymer. The second polyfunctional active hydrogen compound SA1 was bis-(4-aminocyclohexyl)methane. Hereinafter, the second prepolymer is also referred to as the second prepolymer SPP1. The concentration of solids in the liquid reaction product containing the second prepolymer SPP1 was 37.6%.

The number-average molecular weight of the second prepolymer SPP1 was measured to be 13,000. The softening point of the second prepolymer SPP1 was measured to be 98°C.

### Preparation of Functional Layer-Forming Composition AC1

A functional layer-forming composition was obtained by mixing 100 g of the liquid reaction product containing the second prepolymer SPP1, 1.02 g of a photochromic compound PC1, 0.34 g of ethylenebis(oxyethylene)bis[3-(5-tert-butyl-4-hydroxy-m-tolyl)propionate], and 0.05 g of DOW CORNING TORAY L-7001 and stirring them at room temperature. Hereinafter, the resulting functional layer-forming composition is also referred to as the functional layer-forming composition AC1.

PC1: The compound represented by the following formula.

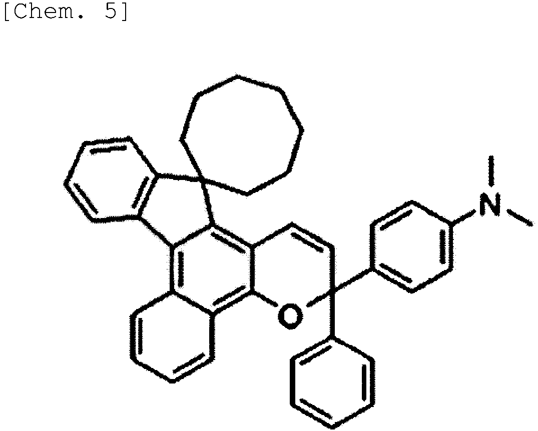

Preparation of Adhesive Layer-Forming Composition PVA1 To a 2 L reaction vessel were added 160 g of Kuraray Poval^{®} 28-98 (fully-hydrolyzed product with a degree of hydrolysis of 98.5 mol%, a number-average molecular weight of 90,700, and a degree of polymerization of 1,850) and 1,440 g of distilled water and mixed to form a mixture. The mixture was heated and stirred at 95°C for 2 hours to form an adhesive composition with a solid content of 10 mass%. Hereinafter, the adhesive composition is referred to as the adhesive composition PVA1. The number-average molecular weight of Kuraray Poval 28-98 was measured by gel permeation chromatography (GPC) under the conditions shown below. A sample solution was obtained by adding 5 mL of a measurement solvent (hexafluoroisopropanol supplemented with 5 mM sodium trifluoroacetate) to 3 mg of the material. The sample solution was analyzed under the conditions: columns, TSKgel guardcolumn Super H-H and TSKgel Super HM-H (manufactured by Tosoh Corporation); eluent, 5 mM sodium trifluoroacetate-supplemented hexafluoroisopropanol; flow rate, 0.3 mL/min; detector, RI detector (RI-504 manufactured by Showa Denko); and column temperature, 40°C. The measurement results are as shown above.

### Preparation of Laminate OL1

First, 60 µm-thick, saponified TAC films were provided as first and second optical base materials. The TAC films exhibited a contact angle of 10° with pure water. Hereinafter, the films are also referred to TAC1. The contact angle was measured using a DropMaster 500 manufactured by Kyowa Interface Science Co., Ltd. The contact angle was measured as the angle between the surface of the film sample and a water droplet on the surface.

The adhesive layer-forming composition PVA1 was applied to one main surface of the TAC1 using a bar coater to form a coating film. The coating film was dried at 120°C for 5 minutes. Thus, the first coating film was formed on the main surface of the first optical base material. Subsequently, the second coating film was formed on one main surface of the second optical base material using the same procedure. The first and second coating films were each 5 µm in thickness.

Next, the functional layer-forming composition AC1 was applied to a PET (polyethylene terephthalate) film (Peulex Film (silicone-coated) manufactured by Toyobo Co., Ltd.) using a bar coater to form a third coating film. After the third coating film was dried at 100°C for 5 minutes, the PET film was removed so that an about 30 µm-thick photochromic adhesive sheet was obtained. The resulting photochromic adhesive sheet was sandwiched between the main surfaces of the first and second coating films on the first and second optical base materials, and they were bonded together to form a first structure. The first structure was a rectangular strip. One longitudinal end portion of the first structure was left uncoated with the functional layer-forming composition.

While being held in place on all four sides for the prevention of shrinkage, the first structure was degassed under the conditions of 40°C and 13 Torr for 16 hours and then heated at 100°C for 6 hours. The resulting product was a laminate including the first optical base material, the first adhesive layer, the functional layer, the second adhesive layer, and the second optical base material stacked in this order.

### Example 2

To a 2 L reaction vessel were added 160 g of Kuraray Poval^{®} 22-88 (partially-hydrolyzed product with a degree of hydrolysis of 88 mol%, a number-average molecular weight of 84,900, and a degree of polymerization of 1,893) and 1,440 g of distilled water and mixed to form a mixture. The mixture was heated and stirred at 95°C for 2 hours to form an adhesive composition with a solid content of 10 mass%. Hereinafter, the adhesive composition is also referred to as the adhesive composition PVA2. The number-average molecular weight of Kuraray Poval 22-88 was measured using the same method as in Example 1.

A laminate was obtained using the same procedure as in Example 1, except that the adhesive composition PVA2 was used instead of the adhesive composition PVA1.

### Example 3

Films TAC2 were provided, which were 60 µm-thick, non-saponified TAC films. The films TAC2 exhibited a contact angle of 60° with pure water.

A laminate was obtained using the same procedure as in Example 1, except that the films TAC2 were used instead of the films TAC1.

### Example 4

To a 2 L reaction vessel were added 160 g of polyvinyl alcohol manufactured by FUJIFILM Wako Pure Chemical Corporation (partially-hydrolyzed product with a degree of hydrolysis of 78 to 82 mol% and an average degree of polymerization of 1,500 to 1,800) and 1,440 g of distilled water and mixed to form a mixture. The mixture was heated and stirred at 95°C for 2 hours to form an adhesive composition with a solid content of 10 mass%. Hereinafter, the adhesive composition is also referred to as the adhesive composition PVA3.

A laminate was obtained using the same procedure as in Example 1, except that the adhesive composition PVA3 was used instead of the adhesive composition PVA1.

### Example 5

To a 2 L reaction vessel were added 160 g of vinyl alcohol-vinylamine copolymer resin Ultiloc^{®} 5003 (fully-hydrolyzed product with a number-average molecular weight of 58,400) and 1,440 g of distilled water and mixed to form a mixture. The mixture was heated and stirred at 95°C for 2 hours to form an adhesive composition with a solid content of 10 mass%. Hereinafter, the adhesive composition is also referred to as the adhesive composition PVA4. The number-average molecular weight of Ultiloc 5003 was measured using the same method as in Example 1.

A laminate was obtained using the same procedure as in Example 1, except that the adhesive composition PVA4 was used instead of the adhesive composition PVA1.

### Example 6

### Production of First Prepolymer FPP1

The first prepolymer FPP1 was obtained as in Example 1.

### Synthesis of Polymerizable Components SPP2 Including First Polymer and Second Prepolymer

To a reactant solution containing the first prepolymer FPP1 at 10°C were added 566 g of the organic solvent OS1 and 157 g of an organic solvent OS2 and maintained at a liquid temperature of 15°C. The organic solvent OS2 was tert-butyl alcohol. To the resulting reactant solution was added dropwise 21.3 g of a second polyfunctional active hydrogen compound SA1 and reacted at 15°C for 1 hour to form a liquid reaction product containing a second prepolymer. The second polyfunctional active hydrogen compound SA1 was bis-(4-aminocyclohexyl)methane. To the resulting liquid reaction product was added dropwise 5.75 g of a monofunctional active hydrogen compound SA2 and further reacted at 15°C for 1 hour to form a liquid reaction product containing polymerizable components including a first polymer and the second prepolymer. The monofunctional active hydrogen compound SA2 was 4-amino-1,2,2,2,6,6-pentamethylpiperidine. Hereinafter, the polymerizable components including the first polymer and the second prepolymer are also referred to as the polymerizable components SPP2. The liquid reaction product containing the polymerizable components SPP2 including the first polymer and the second prepolymer had a solid content of 37.2 mass%.

A laminate was obtained using the same procedure as in Example 1, except that the polymerizable components SPP2 including the first polymer and the second prepolymer were used instead of the second prepolymer SPP1.

### Comparative Example 1

An epoxy resin was dissolved in a mixed solvent of toluene and methanol to form an adhesive layer-forming composition. Hereinafter, the adhesive layer-forming composition is also referred to as the adhesive layer-forming composition EP1.

A laminate was obtained using the same procedure as in Example 1, except that the adhesive composition EP1 was used instead of the adhesive composition PVA1.

### Comparative Example 2

A laminate was obtained using the same procedure as in Example 1, except that the adhesive composition PVA1 was not used. The resulting laminate included the first optical base material, the functional layer, and the second optical base material stacked in this order.

### Comparative Example 3

Films TAC3 were provided, which were 130 µm-thick, saponified TAC films. The films TAC3 exhibited a contact angle of 50° with pure water.

A laminate was obtained using the same procedure as in Comparative Example 2, except that the films TAC3 were used instead of the films TAC1.

### Comparative Example 4

Films TAC4 were provided, which were 130 µm-thick, non-saponified TAC films. The films TAC4 exhibited a contact angle of 50° with pure water.

A laminate was obtained using the same procedure as in Comparative Example 2, except that the films TAC4 were used instead of the films TAC1.

### Evaluation Tests

### Measurement of Photochromic Properties of the Laminate

The resulting laminate was measured for maximum absorption wavelength, color optical density, color fading speed, and durability. Specifically, first, one surface of the laminate was irradiated through Aeromas filter (manufactured by Corning Inc.) with light from a xenon lamp L-2480 (300W) SHL-100 (manufactured by Hamamatsu Photonics K.K.) at a temperature of 23°C for 120 seconds so that the photochromic compound was allowed to develop color. The beam intensity was 2.4 mW/cm² at 365 nm and 24 µW/cm² at 245 nm.

After the color development, the maximum absorption wavelength (Amax) was determined using a spectrophotometer (Instant Multi-Channel Photo Director MCPD1000 manufactured by Otsuka Electronics Co., Ltd.).

The absorbance ε(0) at the maximum absorption wavelength of the laminate was measured without the irradiation with the xenon lamp. The laminate was then irradiated with light at the same intensity from the xenon lamp for 120 seconds when the absorbance ε(120) at the maximum absorption wavelength of the laminate was measured. The color optical density was calculated by subtracting the absorbance ε(0) from the absorbance ε(120). The higher the color optical density, the higher the photochromic performance is considered.

The time required for the color optical density to fall to half the initial value was measured and used as the color fading speed (t1/2 (sec)). The shorter the time, the higher the photochromic performance is considered.

An accelerated degradation test was performed as follows to evaluate the durability of color development performance upon light irradiation. Specifically, the resulting laminate was subjected to accelerated degradation for 96 hours using Xenon Weather Meter X25 manufactured by Suga Test Instruments Co., Ltd. Before and after the accelerated test, the color optical density was determined as described above, and the residual ratio (durability) (A96/A0)×100 (%), wherein A0 and A96 are the color optical densities before and after the test, respectively, was calculated and used as an index of the durability of color development performance. The higher the residual ratio, the higher the durability of color development performance. The results are shown in Table 1.

### Evaluation of Peel Strength of the Laminate

The peel strength of the laminate was evaluated using the following method. Specifically, the optical laminate sheet was cut into test strips of 10 mm × 100 mm. The cutting was performed such that the functional layer-free longitudinal end portions were cut as part of the test strip. In a testing machine Autograph AGS-500NX manufactured by Shimadzu Corporation, the test strip was gripped at the functional layer-free longitudinal end portions of the first and second optical base materials using the upper and lower clamps. The upper clamp was pulled at a crosshead speed of 100 mm/min when the maximum peel force was measured. The maximum peel force was determined to be the peel strength, which is shown in Table 1.

### [Table 1]

**Table 1**

| | Optical laminate sheet | | | | | | Evaluation results | | | |
|---|---|---|---|---|---|---|---|---|---|---|
| | TAC sheet | | | First/second adhesive | | Functional layer-forming composition | Color optical density | Color fading rate (s) | Durability (%) | Peel strength (N/10 mm) |
| | Surface treatment | Thickness (µm) | Contact angle (°) | Type | Degree of hydrolysis (mol%) | | | | | |
| Example 1 | Saponified | 60 | 10 | PVA | 98.5 | SPP 1 | 1.1 | 42 | 97 | 20 |
| Example 2 | Saponified | 60 | 10 | PVA | 88 | SPP 1 | 1.1 | 41 | 88 | 20 |
| Example 3 | Non-saponified | 60 | 60 | PVA | 98.5 | SPP 1 | 1.1 | 42 | 97 | 0.3 |
| Example 4 | Saponified | 60 | 10 | PVA | 78~82 | SPP 1 | 1.1 | 41 | 78 | 18 |
| Example 5 | Saponified | 60 | 10 | PVA/amine | 98.5 | SPP 1 | 1.1 | 42 | 97 | 30 |
| Example 6 | Saponified | 60 | 10 | PVA | 98.5 | SPP2 | 1.1 | 42 | 97 | 10 |
| Comparative Example 1 | Saponified | 60 | 10 | Epoxy | - | SPP 1 | 1.1 | 55 | 2 | 20 |
| Comparative Example 2 | Saponified | 60 | 10 | Absent | - | SPP 1 | 1.1 | 42 | 2 | 6 |
| Comparative Example 3 | Saponified | 130 | 50 | Absent | - | SPP 1 | 1.1 | 42 | 2 | 8 |
| Comparative Example 4 | Non-saponified | 130 | 60 | Absent | - | SPP 1 | 1.1 | 42 | 2 | 0.3 |

Preferred aspects of the present invention will be listed below.
[1] A laminate including:
   a first optical base material having a first main surface and a second main surface;
   a second optical base material having a first main surface and a second main surface;
   a functional layer located between the first optical base material and the second optical base material and comprising a functional colorant and a resin;
   a first adhesive layer adhering to the first optical base material and the functional layer; and
   a second adhesive layer adhering to the second optical base material and the functional layer,
   at least one selected from the group consisting of the first adhesive layer and the second adhesive layer including at least one polyvinyl resin selected from the group consisting of a polyvinyl alcohol resin and a modified polyvinyl alcohol resin.
[2] The laminate according to [1], wherein at least one selected from the group consisting of the first adhesive layer and the second adhesive layer includes at least one polyvinyl resin selected from the group consisting of a polyvinyl alcohol resin, a polyvinyl butyral resin, an acetoacetylated polyvinyl alcohol resin, and an amine-functionalized polyvinyl alcohol resin.
[3] The laminate according to [1] or [2], wherein the polyvinyl resin has a degree of hydrolysis of 40 mol% or more and 98.5 mol% or less.
[4] The laminate according to any one of [1] to [3], wherein at least one selected from the group consisting of the first optical base material and the second optical base material includes at least one resin selected from the group consisting of a cellulose resin, an acrylic resin, a methacrylic resin, a polyurethane resin, a polyurethane urea resin, a polyamide resin, a polyester resin, a polyimide resin, an epoxy resin, a polyolefin resin, a polyvinyl alcohol resin, and a polycarbonate resin.
[5] The laminate according to any one of [1] to [4], wherein at least one selected from the group consisting of the first optical base material and the second optical base material includes a saponified triacetyl cellulose resin.
[6] The laminate according to any one of [1] to [5], wherein the first optical base material and the second optical base material have a contact angle of 5° or more and 15° or less with pure water.
[7] The laminate according to any one of [1] to [6], wherein the first optical base material and the second optical base material each have a thickness of 10 µm or more and 100 µm or less.
[8] The laminate according to any one of [1] to [7], wherein the functional layer includes at least one resin selected from the group consisting of a polyurethane resin, a polyurethane urea resin, a polythiourethane resin, and a polythiourethane urea resin.
[9] The laminate according to any one of [1] to [8], wherein the functional layer contains a photochromic compound.
[10] An optical component including the laminate according to any one of [1] to [9].
[11] A coat layer-bearing laminate including:
   the laminate according to any one of [1] to [9]; and
   a coat layer that covers at least part of the first optical base material and the second optical base material and
   includes at least one resin selected from the group consisting of an epoxy resin, an oxetane resin, an acrylic resin, a methacrylic resin, and a urethane resin.
[12] An optical component including:
   the coat layer-bearing laminate according to [11]; and
   an optical element base material covering at least part of the coat layer.
[13] A lens including the optical component according to [12].
[14] Spectacles including the lens according to [13].
[15] A window film including the laminate according to any one of [1] to [9].

## Claims

1. A laminate comprising:
a first optical base material having a first main surface and a second main surface;
a second optical base material having a first main surface and a second main surface;
a functional layer located between the first optical base material and the second optical base material and comprising a functional colorant and a resin;
a first adhesive layer adhering to the first optical base material and the functional layer; and
a second adhesive layer adhering to the second optical base material and the functional layer,
at least one selected from the group consisting of the first adhesive layer and the second adhesive layer comprising at least one polyvinyl resin selected from the group consisting of a polyvinyl alcohol resin and a modified polyvinyl alcohol resin.

2. The laminate according to claim 1, wherein at least one selected from the group consisting of the first adhesive layer and the second adhesive layer comprises at least one polyvinyl resin selected from the group consisting of a polyvinyl alcohol resin, a polyvinyl butyral resin, an acetoacetylated polyvinyl alcohol resin, and an amine-functionalized polyvinyl alcohol resin.

3. The laminate according to claim 1, wherein the polyvinyl resin has a degree of hydrolysis of 40 mol% or more and 98.5 mol% or less.

4. The laminate according to claim 1, wherein at least one selected from the group consisting of the first optical base material and the second optical base material comprises at least one resin selected from the group consisting of a cellulose resin, an acrylic resin, a methacrylic resin, a polyurethane resin, a polyurethane urea resin, a polyamide resin, a polyester resin, a polyimide resin, an epoxy resin, a polyolefin resin, a polyvinyl alcohol resin, and a polycarbonate resin.

5. The laminate according to claim 1, wherein at least one selected from the group consisting of the first optical base material and the second optical base material comprises a saponified triacetyl cellulose resin.

6. The laminate according to claim 1, wherein the first optical base material and the second optical base material have a contact angle of 5° or more and 15° or less with pure water.

7. The laminate according to claim 1, wherein the first optical base material and the second optical base material each have a thickness of 10 µm or more and 100 µm or less.

8. The laminate according to claim 1, wherein the functional layer comprises at least one resin selected from the group consisting of a polyurethane resin, a polyurethane urea resin, a polythiourethane resin, and a polythiourethane urea resin.

9. The laminate according to claim 1, wherein the functional layer contains a photochromic compound.

10. An optical component comprising the laminate according to claim 1.

11. A coat layer-bearing laminate comprising:
the laminate according to claim 1; and
a coat layer that covers at least part of the first optical base material and the second optical base material and comprises at least one resin selected from the group consisting of an epoxy resin, an oxetane resin, an acrylic resin, a methacrylic resin, and a urethane resin.

12. An optical component comprising:
the coat layer-bearing laminate according to claim 11; and
an optical element base material covering at least part of the coat layer.

13. A lens comprising the optical component according to claim 12.

14. Spectacles comprising the lens according to claim 13.

15. A window film comprising the laminate according to claim 1.
